# EUROPÄISCHE PATENTSCHRIFT

(11) **EP 3 080 748 B1**
(45) Veröffentlichungstag und Bekanntmachung des Hinweises auf die Patenterteilung: **30.05.2018**
(21) Anmeldenummer: 14837026.5
(22) Anmeldetag: 10.12.2014
(51) Int. Cl.: G06K 19/07, G06K 19/077, G06K 7/10

(54) **RFID-KOMMUNIKATIONSSYSTEM UND VERFAHREN ZUM STEUERN DESSELBEN**
RFID COMMUNICATION SYSTEM AND METHOD FOR CONTROLLING SAME
SYSTÈME DE COMMUNICATION RFID ET PROCÉDÉ DE COMMANDE

(30) Priorität: 12.12.2013 DE 102013113978
(43) Veröffentlichungstag der Anmeldung: 19.10.2016
(73) Patentinhaber: Harting It Software Development GmbH & Co. Kg, 32339 Espelkamp (DE)
(72) Erfinder: LAMPE, Marco, 33775 Versmold (DE)
(86) Internationale Anmeldenummer: PCT/DE2014/100437
(87) Internationale Veröffentlichungsnummer: WO 2015/085993

(56) Entgegenhaltungen:
- CN-A- 101 042 724
- KR-A- 20120 100 583
- US-A1- 2010 214 072
- US-B2- 8 402 308

## Beschreibung

Die Erfindung betrifft in einem ersten Aspekt ein RFID-Kommunikationssystem nach dem Oberbegriff des unabhängigen Hauptanspruchs 1.

Die Erfindung betrifft in einem zweiten Aspekt ein Verfahren zum Steuern eines RFID-Kommunikationssystems nach dem Oberbegriff des unabhängigen Nebenanspruchs 15.

### Stand der Technik

Es sind RFID-Kommunikationssysteme mit mehreren Schreiblesestationen bekannt. So wird beispielsweise in der Druckschrift US 8 451 096 eine RFID- Schreiblesestation beschrieben, die ein Schreiblesegerät mit einem Sender, einem Empfänger, einer Prozessoreinheit und mit mindestens einer Schreibleseantenne umfasst. Mittels erster Überwachungsetiketten in den Schreiblesegeräten und zweiter Überwachungsetiketten in den Antennen wird bei diesem Stand der Technik jede Schreib-Lesestation in Bezug auf die Funktionstüchtigkeit aller Komponenten überwacht. Eine Vernetzung der RFID-Komponenten entfällt damit.

Die Druckschrift US 2005 008 828 4 A1 Offenbart ein RFID-System, das ein Netzwerk für mehrere RFID-Reader umfasst, mit dem ein großes Empfangsgebiet abgedeckt wird.

Die Druckschrift EP 1 762 960 B1 offenbart ein Synchronisationsverfahren für Mehrtechnologie-/Mehrfrequenz-RFID-Leseranordnungen.

Die Druckschrift EP 2423846 A2 beschreibt ein Verfahren zum Betreiben eines Systems mit zwei Lesern, die für einen bestimmten Zeitraum gleichzeitig aktiv sind und dabei von einem elektronischen Etikett empfangene Daten untereinander austauschen um zwei identische Kopien der empfangenen Daten zu erzeugen, Damit soll erreicht werden, die Lebensdauer der Leser zu erhöhen und Datenverlust zu vermeiden.

Weiterhin ist es im Stand der Technik bekannt, einzelne RFID-Lesegeräte über eine Middleware miteinander zu verbinden. Die Lesegeräte besitzen verschiedene Antennen an verschiedenen Positionen. Jedes Lesegerät ist in der Regel individuell konfiguriert. In US 8 402 308 werden eine Vorrichtung und ein Verfahren zur Ausfallsicherung eines RFID-Middleware-Systems beschrieben. Die Vorrichtung umfasst mehrere RFID-Lesegeräte, mehrere RFID-Middleware-Komponenten und eine Middleware-Steuerung zum Erkennen eines Geräteausfalls. Die Steuerung dient dazu, die RFID-Middleware neu zu starten oder Arbeit umzuverteilen um die RFID-Middleware zu stabilisieren.

Ein Nachteil im Stand der Technik besteht darin, dass die Redundanz bekannter Systeme mit einem hohen technischen Aufwand und entsprechend hohen Kosten verbunden ist. Gemäß dem derzeit bekannten Stand der Technik muss zur automatischen Absicherung gegen einen Ausfall jedem Lesegerät mindestens ein redundantes Lesegerät zugeordnet werden, welches so konfiguriert ist, dass es das dazugehörige Lesegerät bei dessen Ausfall ersetzen kann. Für viele Anwendungen reicht die Sicherheit der dabei verwendeten RFID-Kommunikationssysteme nicht aus. Dies gilt insbesondere bei kritischen Prozessen, wie z.B. in der Medizintechnik. In der Praxis werden derzeit RFID-Reader, beispielsweise im industriellen Umfeld, aus Kostengründen und aufgrund des Fehlens eines ausreichend ergonomischen RFID-Kommunikationssystems oft ohne oder mit einer zu geringen Redundanz betrieben und z.B. bei einem Ausfall händisch gegen Ersatzlesegeräte ausgetauscht, die zuvor jeweils manuell entsprechend konfiguriert werden müssen, was einen hohen Arbeitsaufwand sowie entsprechende Ausfallzeiten und Kosten zur Folge hat.

### Aufgabenstellung

Die Erfindung hat sich zur Aufgabe gemacht, den unterbrechungsfreien Betrieb eines RFID-Kommunikationssystems auf bedienungsfreundliche Weise zu gewährleisten und seine Betriebssicherheit kostengünstig zu gewährleisten.

Diese Aufgabe wird in dem ersten Aspekt mit einem RFID-Kommunikationssystem der eingangs erwähnten Art durch die Merkmale des kennzeichnenden Teils des unabhängigen Hauptanspruchs 1 gelöst.

In dem zweiten Aspekt wird die Aufgabe mit einem Verfahren der eingangs erwähnten Art durch die Merkmale des kennzeichnenden Teils des unabhängigen Nebenanspruchs 15 gelöst.

Bevorzugte Ausführungsformen der erfindungsgemäßen Lösung sind Gegenstand der jeweiligen Unteransprüche.

Der Erfindung liegt der Gedanke zugrunde, mehrere Lesegeräte (Reader) vorzusehen, die physikalisch in Form von Modulen in einem Einschubsystem angeordnet sein können. Zusätzlich ist ein Managementsystem vorgesehen, das einen Speicher, insbesondere einen Programm/Datenspeicher oder beispielsweise zusätzlich auch einen separaten Zwischenspeicher, sowie einen Managementdatenbus umfasst, über den das Management-System mit den Lesegeräten in bidirektionalem Datenaustausch steht. Bei dem Speicher kann es sich vorzugsweise ein Flash-Speicher, also beispielsweise um einen Flash-Programm/Datenspeicher und/oder einen Flash-Zwischenspeicher handeln. In dem Speicher sind unter anderem die Konfigurationen der aktiven Lesegeräte in Form von Konfigurationsdaten zusätzlich abgelegt. Beispielsweise sind dazu zumindest Teile der Betriebs-Software der aktiven Lesegeräte im Normalzustand sowohl im jeweiligen aktiven Lesegerät als auch im Speicher des Management-Systems abgespeichert und damit im RFID-Kommunikationssystem doppelt vorhanden. Vorteilhafterweise kann dabei außerdem eine Management-Software im Speicher, insbesondere im Programm/Datenspeicher des Managementsystems abgelegt sein.

Das Managementsystem umfasst vorteilhafterweise eine zentrale Konfigurationsverwaltung der einzelnen Lesegeräte, beispielsweise über eine Steuerungseinheit, die insbesondere ein Lesegerät-Selektormodul umfasst. Somit kann jedes Lesegerät, insbesondere nach seinem Ausfall, kurzfristig durch ein anderes Lesegerät ersetzt werden, indem seine Konfigurationsdaten vom Managementsystem und insbesondere von der Steuerungseinheit aus dem Programm/Datenspeicher auf ein zuvor inaktives Lesegerät übertragen werden. Daraufhin wird das inaktive Lesegerät von der Steuerungseinheit aktiviert und übernimmt im RFID-Kommunikationssystem weiterhin sowohl eingangsseitig als auch ausgangsseitig die Funktion, die zuvor das nun ausgefallene Lesegerät innehatte. Dies kann unter anderem durch ein flexibles sogenanntes "Routing", also durch eine digitale Routingmatrix des Managementsystems, ermöglicht werden, welche die Ein- und Ausgänge der Komponenten des RFID-Kommunikationssystems, soweit dies datentechnisch sinnvoll ist, miteinander verbinden oder voneinander trennen kann.

Die Routingmatrix kann als eigenständiges Hardwarebauteil ausgeführt sein. Es kann sich aber auch um eine reine Software, insbesondere um einen Bestandteil einer Managementsystemsoftware, also einer Software des Managementsystems, handeln.

Die Konfigurationsdaten beinhalten eine große Anzahl technischer Parameter, die dem Fachmann bekannt sind, beispielswiese die Antennenausgangsleistung, den gewählten Frequenzbereich, die "listen before talk"-Funktion oder auch die Anzahl der vom jeweiligen Lesegerät verwendeten Antennen, etc.

Das gerade aktivierte Lesegerät wird bei seiner Aktivierung also beispielsweise eingangsseitig mit der/den Antenne(n) verbunden, die zuvor an das nun ausgefallene Lesegerät angeschlossen war(en). Ausgangsseitig kann das neue Lesegerät über die Routingmatrix weiterhin auf diejenigen Eingänge der Komponenten, an die zuvor das nun ausgefallene Lesegerät angeschlossen war, beispielsweise an die entsprechenden Eingänge eines Datenports der Steuerungseinheit, geroutet werden und kann somit das ausgefallene Lesegerät auch im Signalfluss vollständig ersetzen.

Sobald die Hardware des ausgefallenen Lesegerätes durch die Hardware eines neuen Lesegerätes ersetzt wird - also das defekte Lesegerät physikalisch gegen ein neues ausgetauscht wird - kann diese Information dem Managementsystem über eine entsprechende Schnittstelle, beispielsweise durch ein externes Bedienelement oder durch Anschließen eines Laptops oder dergleichen, mitgeteilt und beispielsweise in die Managementsystemsoftware eingearbeitet werden, so dass das neue Lesegerät im RFID-Kommunikationssystem die Rolle eines inaktiven (redundanten) Lesegerätes übernimmt, also zunächst vom Managementsystem als deaktives Lesegerät verwaltet wird.

Beispielsweise ist ein gattungsgemäßes RFID-Kommunikationssystem zum Identifizieren und/oder zum Erfassen eines momentanen Aufenthaltsortes von mindestens einem RFID-Transponder in einem vorgegebenen Gebiet vorgesehen und umfasst dazu mindestens eine Basisstation, die unter anderem zum Erzeugen eines elektromagnetischen Versorgungsfeldes für mindestens einen RFID-Transponder in dem vorgegebenen Gebiet geeignet ist. Der RFID-Transponder dient dabei zum Senden eines Identifizierungssignals bei einer vorgegebenen Kommunikationsfrequenz und die Basisstation dient weiterhin zum Empfangen dieses Identifizierungssignals. Weiterhin umfasst die Basisstation mindestens ein aktives Lesegerät zum Erzeugen eines Ausgangssignals in Abhängigkeit von dem Identifizierungssignal des RFID-Transponders und mindestens ein inaktives Lesegerät.

Erfindungsgemäß kann wird ein solches gattungsgemäßes RFID-Kommunikationssystem dadurch weiterentwickelt werden, dass die mindestens eine Basisstation weiterhin umfasst: Die Steuerungseinheit, die beispielsweise zum Deaktivieren des oder eines aktiven Lesegerätes und weiterhin auch zum Aktivieren des oder eines inaktiven Lesegerätes, beispielsweise in Abhängigkeit von mindestens einem vorgegebenen Systemparameter, geeignet ist, sowie den Speicher, der zum Zwischenspeichern von Konfigurationsdaten und zum Ausgeben der Konfigurationsdaten an das aktivierte Lesegerät beim oder nach dem Aktivieren durch die Steuerungseinheit dient.

Bei dem Speicher kann es sich, wie bereits erwähnt, um einen speziell dafür vorgesehenen Zwischenspeicher handeln. Es kann aber auch um den Programm/Datenspeicher handeln, der außerdem noch weitere Daten, beispielswiese Programmanweisungen, insbesondere die Managementsystemsoftware, und/oder ggf. noch weitere Systemdaten des Managementsystems beinhalten kann. Dabei ist es unerheblich, ob es sich um einen externen Speicher handelt, der beispielsweise über eine Schnittstelle mit einem Steuersystem des RFID-Kommunikationssystems in bidirektionalem Datenaustausch steht, oder ob es sich um einen internen Speicher handelt, der beispielsweise integraler Bestandteil der Steuerungseinheit sein kann. Beispielsweise kann ein Prozessor dafür zuständig sein, die im Programm/Datenspeicher abgelegten Programmanweisungen, insbesondere unter Verwendung der ggf. ebenfalls dort abgelegten weiteren Systemdaten des Managementsystems, auszuführen. Eine solche Ausführung kann beispielsweise darin bestehen, den Aktivitätsstatus der aktiven Lesegeräte in regelmäßigen Zeitintervallen abzufragen und bei Ausfall eines aktiven Lesegerätes dieses zu identifizieren und die dazugehörigen Konfigurationsdaten des identifizierten ausgefallenen Lesegerätes aus dem Speicher, beispielsweise dem Programm/Datenspeicher oder einem speziellen Zwischenspeicher, in ein inaktives (redundantes) Lesegerät zu laden und dieses redundante Lesegerät zu aktivieren und dabei das oben beschriebene Routing durchzuführen, so dass dieses zuvor redundante Lesegerät das ausgefallene Lesegerät ersetzt, indem es nun als aktives Lesegerät fungiert und beispielsweise zum Identifizieren des mindestens einen RFID-Transponders anstelle des ausgefallenen Lesegerätes dient. In diesem Fall kann also der Prozessor zusammen mit dem Speicher, insbesondere dem Programm/Datenspeicher, die Funktion der Steuerungseinheit und insbesondere auch die des Lesegerät-Selektormoduls übernehmen, Ein solches Lesegerät-Selektormodul kann aber alternativ dazu auch auf der Basis eines separaten Hardware-Bauteils ausgebildet sein, das einen eigenen Prozessor aufweist. Auch die gesamte Steuerungseinheit kann auf der Basis eines eigenständigen Hardware-Moduls aufgebaut und als diese ebenfalls Bestandteil des Managementsystems sein.

Der jeweilige modulare Aufbau in Form einzelner Einheiten und Module ist besonders vorteilhaft für die kostengünstige und flexible Anpassung eines solchen Managementsystems an Kundenwünsche. Eine Integration in eine Hardwareumgebung mit einem zentralen Prozessor und einem zentralen Speicher besitzt dem gegenüber bei der Herstellung großer baugleicher Stückzahlen Kostenvorteile.

Vorteilhafterweise ist ein solches Lesegerät-Selektormodul über einen LG-Selektorbus an die aktiven und inaktiven Lesegeräte angeschlossen, insbesondere um die Lesegeräte darüber gegebenenfalls aktivieren bzw. deaktivieren zu können. Dies ist besonders vorteilhaft, weil es dadurch möglich ist, die Funktion der Lesegeräte zentral vom Managementsystem aus zu bestimmen.

Insbesondere ist es somit von besonders großem Vorteil, dass die mehreren aktiven Lesegeräte dabei zueinander auch unterschiedlich konfiguriert sein können (und üblicherweise auch sind), was in der üblichen Anwendungspraxis notwendig und sinnvoll und dem Fachmann grundsätzlich bekannt ist. Die erfindungsgemäße Lösung gestattet aber gerade für diese unterschiedlich konfigurierten Lesegeräte ein hohes Maß an Ausfallsicherheit für jedes Lesegerät auch bei der besagt geringen Redundanz, d.h. mit dem erfindungsgemäß erzielten geringem zusätzlichen Hardwareaufwand. Die ist besonders vorteilhaft, weil dadurch Kosten gespart werden.

In einer bevorzugten Ausgestaltung ist die Anzahl der inaktiven Lesegeräte kleiner als die Anzahl der aktiven Lesegeräte. Insbesondere genügt sogar ein einziges inaktives (redundantes) Lesegerät um eine beliebige Anzahl aktiver Lesegeräte abzusichern.

Dies hat den Vorteil, dass eine für die meisten Fälle ausreichende Redundanz auch bei einem vergleichsweise geringen Hardwareaufwand gegeben ist, was die Kosten eines solchen RFID-Kommunikationssystems verringert. Dabei ist während des normalen Betriebs jedes der aktiven Lesegeräte auch dann automatisch gegen einen Ausfall abgesichert, wenn nur ein einziges inaktives Lesegerät zum Austausch jedes der aktiven Lesegeräte zur Verfügung steht. Nach einem Ausfall muss die Hardware des ausgefallenen Lesegeräts aber möglichst zeitnah gegen eine neue funktionsfähige Lesegeräthardware ausgetauscht werden, welche daraufhin die Rolle des inaktiven (redundanten) Lesegeräts übernimmt, so dass die ursprüngliche Redundanz wieder hergestellt ist.

Es sind aber beispielsweise auch Ausführungen denkbar, bei denen die Anzahl der aktiven Lesegeräte mit der Anzahl der inaktiven Lesegeräte übereinstimmt oder diese sogar überschreitet. Doch auch in diesen Fällen ist das Verhältnis zwischen dem erfindungsgemäß erzielten erhöhten Maß an Sicherheit und dem dazu notwendigen Hardwareaufwand aufgrund der flexiblen Einsetzbarkeit der inaktiven (redundanten) Lesegeräte vorteilhaft gegenüber dem bekannten Stand der Technik.

Im Folgenden sollen für eine Anzahl n inaktiver (redundanter) Lesegeräte und m aktiver Lesegeräte einige solcher Spezialfälle beispielhaft beschrieben werden:
n = 1 und m > 1 : Jedes beliebige aktive Lesegerät kann bei einem Ausfall automatisch ersetzt werden, aber vor dem Ausfall eines weiteren aktiven Lesegerätes muss das ausgefallene Lesegerät händisch durch ein neues Lesegerät ersetzt werden, wobei das neue Lesegerät aber nicht manuell konfiguriert werden muss. Diese Variante ist besonders kostengünstig.

n < m : Beliebige n aktive Lesegeräte können ausfallen und automatisch ersetzt werden, bevor zumindest eines davon händisch gegen ein neues ausgetauscht werden muss. Dies Variante gestattet eine für die jeweilige Anwendung individuell dimensionierbare Redundanz und somit einen besonders vorteilhafte individuelle Anpassung an die jeweiligen wirtschaftlichen und technischen Vorgaben.

n = m : Sämtliche aktive Lesegeräte können gleichzeitig, bzw. vor dem Austauschvorgang, ausfallen und automatisch ersetzt werden. Dies ist besonders vorteilhaft für Anwendungen, bei denen ein Totalausfall möglich ist und abgesichert werden soll.

n > m: Selbst nach einem Totalausfall sämtlicher aktiver Lesegeräte verbleibt noch eine Redundanz von n - m, so dass jedes beliebige aktive Lesegerät auch weiterhin abgesichert ist, bevor der händische Austausch erfolgt. Ist beispielsweise der folgende Fall gegeben: n = m + 1, so ist selbst nach einem Totalausfall sämtlicher, also m aktiver Lesegeräte und deren automatische Ersetzung durch dementsprechend n = m redundante Lesegeräte immer noch jedes der aktiven Lesegeräte durch das eine verbleibende redundante Lesegerät gegen einen weiteren Ausfall abgesichert. Dies ist besonders vorteilhaft für Anwendungen, bei denen nach einem Totalausfall kein sofortiger händischer Zugriff möglich oder gewollt ist, beispielsweise beim Einsatz an unzugänglichen Stellen, in der Tiefsee, in der Raumfahrt, In Kernkraftwerken und Endlagern sowie in nicht durchgehend betretbaren Laborräumen, um nur einige Beispiele zu nennen.

Somit stellt jeder dieser Fälle gegenüber dem Stand der Technik eine erhebliche Erhöhung der Betriebssicherheit bei nahezu gleichem Hardwareaufwand und damit einen Vorteil dar.

Besonders vorteilhaft ist es weiterhin, wenn die Lesegeräte physikalisch in Form von Modulen in einem Einschubsystem angeordnet sind, zum einen, weil dies die händische Austauschbarkeit ausgefallener Lesegeräte gegen neue Lesegeräte vereinfacht und zum anderen, weil dies eine Ergänzung des RFID-Kommunikationssystems um weitere redundante Lesegeräte ermöglicht. So kann beispielsweise bei Bedarf die Redundanz beispielswiese von n < m auf n = m durch Einschub von m - n Modulen auf eine besonders bedienungsfreundliche und kostengünstige Weise erhöht werden, da die bestehende Hardware nicht ausgetauscht werden muss sondern modular ergänzt werden kann. In der Praxis spielt diese modulare Erweiterungsfähigkeit eine besondere Rolle, nämlich insbesondere dann, wenn sich ein System an eine wachsende und gegen Ausfälle zunehmend sensiblere Struktur anpassen muss, beispielsweise wenn eine exportorientierte Firma in Richtung neuer Technologien expandiert, wenn eine Produktionsstraße qualitativ und/oder quantitativ vergrößert wird, wenn ein Krankenhaus sich um neue, möglicherweise besonders sensible Bereiche erweitert oder ein Onlinehandel neue Geschäftsfelder erschließt, um nur einige Anwendungen beispielhaft zu erwähnen. Die Erfindung ermöglicht, dass ein solches RFID-Kommunikationssystem, nachdem es anfangs einmal eingerichtet wurde, mit solchen Strukturen durch Hinzufügen von Modulen mit nur minimalem händischem Aufwand wächst, und zwar idealerweise ohne zusätzlichen Programmieraufwand. Gleichzeitig brauchen die bereits existierenden und erprobten Teile des Systems nicht geändert zu werden. Der unterbrechungsfreie Betrieb ist also auch bei einer solchen Erweiterung grundsätzlich gewährleistet, was insbesondere aus wirtschaftlichen Gründen von besonders großem Vorteil ist.

Ein weiterer Vorteil eines solchen modularen Aufbaus mit einem dazugehörigen Managementsystem kann darin bestehen, dass die Hardware und insbesondere die Ein- und Ausgange, also die sogenannten "Ports" der einzelnen Lesegeräte, auch untereinander frei konfigurierbar sind, d.h. ein aktives Lesegerät kann die Ein- und/oder Ausgänge eines anderen aktiven Lesegerätes nutzen, indem die dazugehörigen Daten über das Managementsystem dorthin "geroutet" werden. So kann bei Bedarf ein solches System auch in seiner Funktion modular erweitert werden, z.B. die von einer Antenne eines anderen Lesegerätes empfangenen Signaldaten nutzen, welches z.B. in einem anderen Frequenzbereich arbeiten kann. Dies stellt selbstverständlich einen zusätzlichen Vorteil dar. Insbesondere übermittelt die Basisstation dabei also Signaldaten von dem mindestens einen RFID-Transponder zwischen mindestens zwei aktiven Lesegeräten.

Ein weiterer Vorteil besteht darin, dass die Hardware eines solchen Systems bei Bedarf kostengünstig, nämlich durch Hinzufügen einzelner Module, nachgerüstet werden kann, beispielsweise um eine höhere Sendeleistung, einen größeren Empfangsbereich, eine höhere Redundanz und/oder eine größere Anzahl von Ein- und Ausgängen zu erreichen.

Gleichzeitig können die vorhandenen Ressourcen dabei aus folgenden Gründen optimal ausgenutzt werden:
Zum einen können sämtliche Ein- und Ausgänge vom Managementsystem frei verwaltet werden. Somit können ungenutzte Ports eines aktiven Lesegerätes durch ein anderes aktives Lesegerät genutzt werden.

Zum anderen muss nur ein einziges inaktives Lesegerät vorgehalten werden um als Ersatz für eines der mehreren aktiven Lesegeräte eingesetzt werden zu können. In dieser Hinsicht ermöglicht die Erfindung eine minimale Redundanz des Systems, d.h. es wird ein Maximum an Sicherheit mit einem Minimum an Hardwareaufwand erreicht, der zudem auch noch modular erweiterbar ist.

Bevorzugte Ausführungsformen des erfindungsgemäßen RFID-Kommunikationssystems weisen als weiteres Merkmal oder als Kombination von weiteren Merkmalen - soweit technisch möglich und sinnvoll - auf, dass
- die Basisstation mindestens zwei inaktive Lesegeräte umfasst und die Steuerungseinheit ausgelegt ist zum Aktivieren der mindestens zwei inaktiven Lesegeräte in einer vorgegebenen Reihenfolge;
- die Steuerungseinheit ausgelegt ist zum Aktivieren des oder eines inaktiven Lesegerätes vor dem Deaktivieren des oder eines aktiven Lesegerätes, so dass während einer vorgegebenen Dauer zumindest zwei Lesegeräte aktiv sind, wobei das Ausgangssignal nur von einem dieser beiden aktiven Lesegeräte durch die Basisstation ausgegeben wird;
- ein Eingang vorgesehen ist für ein externes Schaltsignal als System parameter;
- das externe Schaltsignal eine Änderung der vorgegebenen Kommunikationsfrequenz anzeigt;
- das externe Schaltsignal eine Änderung einer Betriebsprogrammversion bei einem oder mehreren der Lesegeräte anzeigt;
- ein Heartbeat-Signal vorgesehen ist als ein Bereitschaftssignal von relevanten Komponenten, beispielsweise von den Lesegeräten und insbesondere als Aktivitätszustand von den aktiven Lesegeräten;
- die Steuerungseinheit mindestens einen GPIO-Port umfasst zum Ausgeben von mindestens einem Ausgangssignal in Abhängigkeit von dem Identifizierungssignal des mindestens einen RFID-Transponders an ein oder mehrere Ausgabegeräte und/oder zum Übermitteln von Betriebs-Software an inaktive Lesegeräte;
- der GPIO-Port acht Kontakte aufweist, die einen logischen Kanal bilden.

Bevorzugte Ausführungsformen des erfindungsgemäßen Verfahrens für ein RFID-Kommunikationssystem weisen als weiteres Merkmal oder als Kombination von weiteren Merkmalen - soweit technisch möglich und sinnvoll - auf, dass
- das Aktivieren von mindestens zwei inaktiven Lesegeräten durch die Steuerungseinheit in einer vorgegebenen Reihenfolge erfolgt;
- das Aktivieren des oder eines inaktiven Lesegerätes vor dem Deaktivieren des aktiven Lesegerätes durch die Steuerungseinheit erfolgt, so dass während einer vorgegebenen Dauer zwei Lesegeräte aktiv sind, wobei das Ausgangssignal nur von einem der beiden aktiven Lesegeräte durch die Basisstation ausgegeben wird;
- ein externes Schaltsignal als Systemparameter abgefragt wird;
- das externe Schaltsignal eine Änderung der vorgegebenen Kommunikationsfrequenz anzeigt;
- das externe Schaltsignal eine Änderung einer Betriebsprogrammversion bei einem oder mehreren der Lesegeräte anzeigt;
- als Systemparameter ein Bereitschaftssignal von relevanten Komponenten, beispielsweise von den Lesegeräten und insbesondere ein Aktivitätszustand von den aktiven Lesegeräten abgefragt oder aktiv gesendet wird, wobei das Bereitschaftssignal insbesondere ein Heartbeat-Signal ist;
- als weiterer Schritt vorgesehen ist Ausgeben von mindestens einem Ausgangssignal in Abhängigkeit von dem Identifizierungssignal des mindestens einen RFID-Transponders an ein oder mehrere Ausgabegeräte und/oder Übermitteln von Betriebs-Software an inaktive Lesegeräte über mindestens einen GPIO-Port;
- der GPIO-Port acht Kontakte aufweist, die einen logischen Kanal bilden.

Die Erfindung hat u.a. den Vorteil, dass neben der Sicherstellung eines unterbrechungsfreien Betriebs eine höhere Flexibilität bei der Konfiguration der Komponenten gegeben ist. Insbesondere ergibt sich eine flexiblerer Konfigurierbarkeit und damit eine effektiv höhere Anzahl und der Ein- und Ausgänge des RFID-Kommunikationssystems bei nahezu gleichem Hardwareaufwand.

### Ausführungsbeispiel

Ein Ausführungsbeispiel der Erfindung ist in der Zeichnung dargestellt und wird im Folgenden näher erläutert. Es zeigt:
Fig. 1 a schematisch eine Ausführungsform des erfindungsgemäßen RFID-Kommunikationssystems;
Fig. 1b,c,d eine Teildarstellung einer alternativen Ausgestaltung unter Einbeziehung einer Routingmatrix beim Vorgang des Ausfalls und Austauschs eines Lesegerätes;
Fig. 2 schematisch eine weitere Ausführungsform der Basisstation des erfindungsgemäßen RFID-Kommunikationssystems;
Fig. 3 ein Flussdiagramm einer ersten Ausführungsform des erfindungsgemäßen Verfahrens zum Steuern eines RFID-Kommunikationssystems;
Fig. 4 ein Flussdiagramm einer weiteren Ausführungsform des erfindungsgemäßen Verfahrens zum Steuern eines RFID-Kommunikationssystems;
Fig. 5 a,b,c eine mögliche Konstellation von aktiven und inaktiven Lesegeräten mit drei alternativen Austauschvorgängen;
Fig. 6 den Konfiguratioinsdatenverkehr zwischen mehreren aktiven und inaktiven Lesegeräten und dem erfindungsgemäßen Managementsystem;
Fig. 7 den Datenverkehr zwischen mehreren aktiven und inaktiven Lesegeräten und dem erfindungsgemäßen Managementsystem zur Übertragung von Signaldaten.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

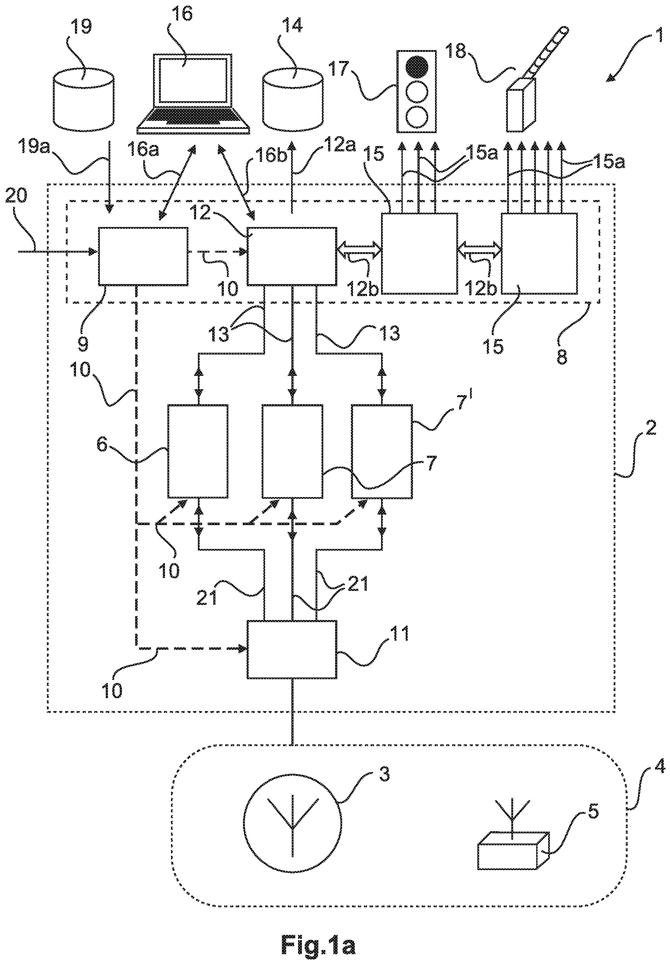

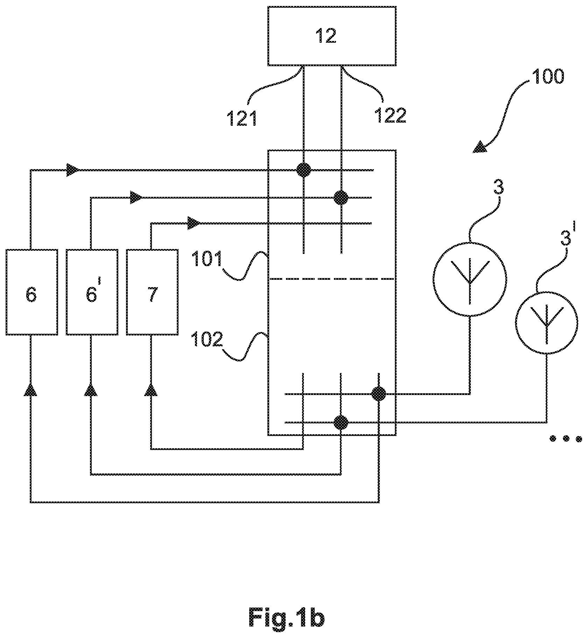

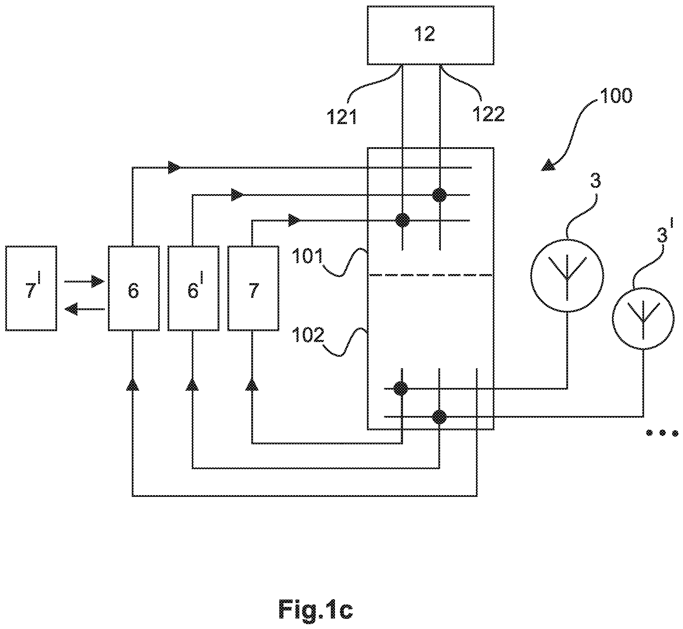

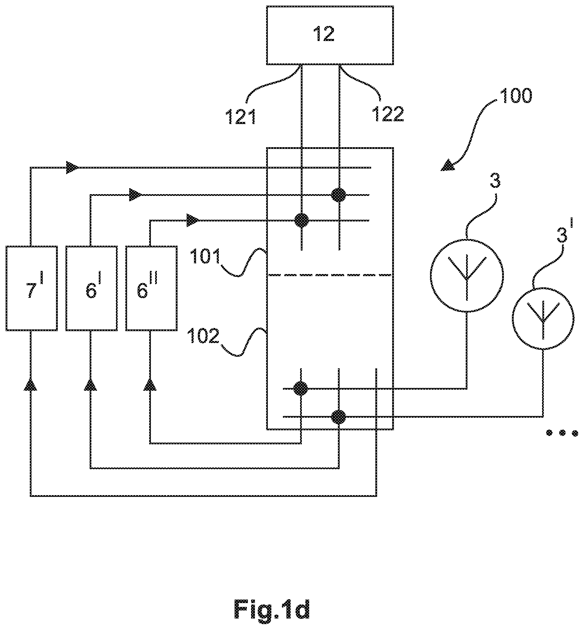

In der Fig. 1 sind die wesentlichen Komponenten eines RFID-Kommunikationssystems 1 mit einem Managementsystem in einer ersten Ausführung gezeigt. Eine Basisstation 2 versorgt eine Antenne 3 mit Kommunikationssignalen bzw. liest über die Antenne 3 empfangene Signale eines RFID-Transponders 5 ein, verarbeitet diese und leitet sie beispielsweise nach einer Aufbereitung an den Betreiber des RFID-Kommunikationssystems 1 weiter und/oder stellt an ihren Ports 15a entsprechende Signale und/oder Daten zur Verfügung.

Die Antenne 3 ist dabei so ausgelegt, dass sowohl ihre Sendeleistung als auch ihre Empfangsempfindlichkeit dafür ausreicht, einen vorgegebenen Kommunikationsbereich 4 abzudecken. In dem Kommunikationsbereich 4 wird durch ein von der Antenne 3 abgestrahltes Versorgungsfeld jeder RFID-Transponder 5 mit Energie versorgt, so dass er ein Identifizierungssignal absetzen kann, mit dem er durch die Basisstation 2 und die darüber liegende Applikations-Software identifizierbar ist. Für das Einlesen der Identifizierungsdaten von dem RFID-Transponder 5 und für deren Aufbereitung und Weiterleitung in der Basisstation 2 sind mehrere integrierte Lesegeräte vorgesehen. Gemäß der vorliegenden Ausführung ist dabei nur eines der mehreren Lesegeräte aktiv. Es ist in Fig. 1 mit 6 bezeichnet. Daneben sind in dieser Darstellung weitere Lesegeräte 7 vorgesehen, die jedoch inaktiv sind und an der Kommunikation in dem Gebiet 4 nicht teilnehmen. Die inaktiven Lesegeräte 7 stellen eine Reserve für das aktive Lesegerät 6 dar, falls dieses durch den Betreiber abgeschaltet wird oder aufgrund eines Fehlers ausfällt. Die Redundanz dieses Systems ist also besonders hoch.

Eine Aktiverung sowie Deaktivierung der entsprechenden Lesegeräte 6,7,7' und die Auswertung der Ausgangssignale erfolgt durch eine Steuerungseinheit 8. Die Steuerungseinheit 8 umfasst in der in Fig. 1 gezeigten Ausführungsform mehrere Einzelkomponenten. Die Auswahl des aktiven Lesegerätes 6 wird dabei von einem LG- (Lesegerät-) Selektormodul 9 vorgenommen, Dieses LG-Selektormodul 9 ist zu diesem Zweck über einen LG-Selektorbus 10 mit allen Lesegeräten 6,7,7' sowie mit einem Antennen- Switch 11 verbunden. Ferner ist es über den LG-Selektorbus 10 mit einem Datenport 12 verbunden. Das LG-Selektormodul 9 weist über den Bus 10 jedes der Lesegeräte 6,7,7' an, in den aktiven bzw. in den inaktiven Zustand zu wechseln. Auf diese Art ist sichergestellt, dass mindestens ein Lesegerät aktiv ist. Ferner weist das LG-Selektormodul 9 den Datenport 12 an, nur die aktiven Lesegeräte 6 auszulesen und die inaktiven Lesegeräte 7,7' zu ignorieren.

Desweiteren wird von dem LG-Selektormodul 9 über den LG-Selektorbus 10 der Antennen-Switch 11 so angesteuert, dass die Antenne 3 mit dem jeweils aktiven Lesegerät 6 verbunden ist und somit letzteres auch mit relevanten Signalen aus dem überwachten Gebiet 4 versorgt wird.

Alternativ dazu ist auch eine in dieser Form nicht explizit in der Fig.1 a dargestellte Ausführung vorgesehen, in welcher die Basisstation 2 mehrere aktive Lesegeräte 6,6',6",.. und insbesondere sogar mehr aktive 6 als inaktive 7 Lesegeräte, also beispielswiese nur ein einziges inaktives Lesegerät 7 und mehrere, beispielsweise zwei aktive Lesegeräte 6,6', aufweist. In einer solchen Ausführungsform ist für jedes aktive Lesegerät 6,6' zumindest eine dazugehörige Antenne 3 und ein eigenes dazugehöriges überwachtes Gebiet 4 vorgesehen, wobei diese Gebiete 4 sich gegenseitig nicht überschneiden, um so eine Mehrfachdetektion eines bestimmten RFID-Transponders 5 zu vermeiden.

Insbesondere kann dabei, beispielsweise durch ein flexibles Routing über das Managementsystem, ermöglicht werden, diese mehreren aktiven Lesegeräte 6 mit dem einen inaktiven Lesegerät 7 abzusichern. Dazu sind weiterhin die Konfigurationsdaten sämtlicher aktiver Lesegeräte 6 in dem Speicher, insbesondere dem Programm/Datenspeicher 19 abgelegt. Das Managementsystem umfasst dabei einen Speicher, insbesondere den Programm/Datenspeicher 19, und weiterhin den Antennen-Switch 11 und den Datenport 12, Der Speicher, insbesondere der Programm/Datenspeicher 19, kann dabei, wie in der Fig. 1 dargestellt, extern angeordnet sein und dementsprechend z.B. über eine Schnittstelle und einen Speicherbus 19a mit der Steuerungseinheit 8 der Basisstation 2 kommunizieren.

Es kann sich bei dem Programm/Datenspeicher 19 aber auch um einen integrativen Bestandteil der Basisstation 2 und insbesondere der Steuerungseinheit 8 handeln. Es versteht sich von selbst, dass das Managementsystem zur Ausführung von Programmanweisungen, die beispielsweise in dem Programm/Datenspeicher abgelegt sind, zumindest einen Prozessor benötigt. Im vorliegenden Fall handelt es sich bei dem mindestens einen Prozessor um einen Bestandteil der Basisstation 2, beispielsweise der Steuerungseinheit 8 und insbesondere um einen Bestandteil des LG-Selektormodul9.

Bei Ausfall eines der aktiven Lesegeräte 6 werden die dazugehörigen Konfigurationsdaten aus dem Speicher, insbesondere dem Programm/Datenspeicher 19, in eines der inaktiven (redundanten) Lesegeräte 7 übertragen. Weiterhin wird dieses Lesegerät durch das Lesegerät-Selektormodul aktiviert und wird so von einem inaktiven Lesegerät zu einem aktiven Lesegerät umfunktioniert. Dadurch ist es möglich, mehrere unterschiedlich konfigurierte aktive Lesegeräte durch ein einziges inaktives (redundantes) Lesegerät abzusichern. Somit kann der hardwareaufwand verringert werden und es werden Kosten gespart.

Das inaktive Lesegerät 7 ist somit dazu in der Lage, bei Bedarf jedes beliebige, gerade ausgefallene aktive Lesegerät 6,6' zu ersetzen. So können auch die mehreren aktiven Lesegeräte 6,6' durch eine geringere Anzahl inaktiver (redundanter) Lesegeräte 7, also mit verhältnismäßig geringem Hardwareaufwand gegen einen Ausfall abgesichert sein.

Die Lesegeräte 6,7,7' sind über eigene Datenleitungen 13 mit dem Datenport 12 verbunden. Über ihre jeweiligen Antennenausgänge 21 sind die Lesegeräte 6,7,7' mit dem Antennen-Switch 11 verbunden. An diesen Stellen befindet sich in einer vorteilhaften Ausführung eine in den folgenden Fig. 1b,c,d ausführlich dargestellte Routing-Matrix 100 des Managementsystems, nämlich ein erster Teil der Routingmatrix 101 zwischen den Lesegeräten 6,7,7' und dem Datenport 12 und ein zweiter Teil 102 zwischen der Antenne 3 und den Lesegeräten 6,7,7', wobei die Routingmatrix 100 funktional mit dem in dieser Darstellung gezeigten Antennen-switch 11 korrespondiert. Es versteht sich von selbst, dass die Routingmatrix 100 auch noch weitere Teile besitzen kann, die sich an weiteren Stellen im Signalfluss befinden. Weiterhin ist es dem Fachmann klar, dass selbstverständlich nur dann Ausgänge auf Eingänge geroutet werden können, wenn dies datentechnisch sinnvoll ist, die Daten also z.B. im gleichen Format vorliegen.

Der Datenport 12 überträgt die Daten von dem aktiven Lesegerät 6 über seinen Ausgabebus 12a an eine externe Datenbank 14, auf der eine entsprechende Auswerte-Software läuft. Neben einer solchen Middleware-Einrichtung 14 kann die Steuerungseinheit 8 die RFID-Daten von dem oder den aktiven Lesegeräten 6 auch an weitere Einrichtungen übermitteln. Alternativ oder zusätzlich ist der Datenport 12 folglich über einen entsprechenden internen Bus 12b mit einer Mehrzweckschnittstelle 15 verbunden, die ihrerseits diverse Ein- und Ausgabegeräte ansteuert. Die Verbindung 12b zwischen dem Datenport 12 und der Mehrzweckschnittstelle 15 ist in Fig. 1 durch einen Doppelpfeil angedeutet. Die Mehrzweckschnittstelle 15 ist vorzugsweise ein GPIO- (general purpose input/output) Port. Ein solcher GPIO-Port 15 weist mehrere Ausgangskontakte 15a auf, typischerweise acht Kontakte, die einzeln abgerufen bzw. belegt werden können oder die gemeinsam als ein logischer Kanal angesprochen werden. Exemplarisch sind die beiden GPIO-Ports 15 in Fig. 1 mit drei bzw. vier Kontakten 15a dargestellt. Als Beispiele für Ein- und Ausgabegeräte, die von dem oder mehreren GPIO-Ports 15 versorgt werden, sind in Fig. 1 eine als Ampel angedeutete Zugangskontrolle 17 und eine als Schranke angedeutete Verriegelungseinrichtung 18 dargestellt. Weitere GPIO-Ports 15 können hinzugeschaltet werden, wie es in Fig. 1 angedeutet ist.

Über den oder die GPIO-Ports 15 werden elektrische Signale ausgegeben. Daneben können über entsprechende Schnittstellen auch Daten an andere Ausgabeeinheiten ausgegeben werden bzw. Daten in das System eingespielt werden. Dies ist insbesondere dann der Fall, wenn eine Aktualisierung der Software einzelner Komponenten wie einer Firmware der Lesegeräte 6 oder der Applikations-Software der Steuerungseinheit 8 ansteht. Diese aktualisierte Software kann beispielsweise auf dem externen Programm/Datenspeicher 19 gespeichert sein und dann über den eigenen Speicherbus 19a in das System eingespielt werden. Die aktuelle Betriebs-Software der aktiven Lesegeräte 6, oder zumindest die für deren Konfiguration relevanten Teile, können dann als Konfigurationsdaten in einem Speicher, z. B. in einem internen Speicher des LG-Selektormoduls 9 oder dem Programm/Datenspeicher 19 oder einem in dieser Fig. 1 nicht dargestellten Zwischenspeicher 35 zwischengespeichert und bei Bedarf auf ein inaktives (redundantes) Lesegerät 7,7' aufgespielt werden. Der Befehl zu einer Aktualisierung der Firmware wird insbesondere über einen externen Schalteingang 20 der Basisstation 2 gegeben. Dabei kann an dem Schalteingang 20 ein einfaches elektrisches Signal anliegen oder auch ein digitales Signal, das beispielsweise über einen Datenbus abgefragt wird.

Selbstverständlich können auch weitere Befehle über den externen Schalteingang 20 an die Basisstation 2 übermittelt werden. Dadurch kann die Basisstation 2 beispielsweise aus einem Ruhezustand in einen Betriebszustand überführt werden. Als Beispiel fahre ein Fahrzeug vor eine Schranke eines Firmengeländes, wo eine Zugangskontrolle stattfindet. Eine Lichtschranke registriert das Fahrzeug. Alternativ dazu kann eine im Boden eingelassene Induktionsschleife ein Schaltsignal an die Basisstation 2 und damit an das aktive Lesegerät 6 senden, woraufhin das Lesegerät initiiert wird, das Identifizierungssignal des RFID-Transponders 5 zu lesen.

Durch die Induktionsschleife bzw. durch die Lichtschranke wird die Basisstation 2 in Bereitschaft gesetzt, so dass das aktive Lesegerät 6 Signale von der Antenne 3 aufnimmt und den RFID-Transponder 5 des Fahrzeugs ausliest. Die Berechtigung des Fahrzeugs wird überprüft. Das Lesegerät 6 gibt über den Datenport 12 und den GPIO-Port 15 an die angeschlossenen Ausgabegeräte das Signal zum Umschalten der Ampelanlage 17 und zum Öffnen und Schließen der Schranke 18 aus. Über ein anderes Ausgabegerät, z.B. den Client-Rechner 16 wird die Rezeption informiert. Insbesondere kann auf dem Client-Rechner 16 an der Rezeption der als Systemparameter an dem externen Schalteingang 20 anliegende Befehl angezeigt werden. Dazu ist der Client-Rechner 16 über einen ersten Bus 16a direkt mit dem LG-Selektormodul 9 verbunden und über einen zweiten Bus 16b direkt mit dem Datenport 12.

Dem Fachmann ist klar, dass die bisher beschriebenen Datenbusse 12a, 16a, 16b, 19a, 20 auch zu einem einzigen Netzwerkbus, z.B. einem Ethernet-Bus zusammengefasst werden können. Aus Übersichtlichkeitsgründen sind daher nicht alle Datenbusse und dazugehörige Bezugszeichen in die Zeichnung eingetragen.

Da über den GPIO-Port 15 mehrere Ausgänge zur Verfügung stehen, kann mit marktüblichen und somit vergleichsweise preisgünstigen Lesegeräten eine Konfiguration hergestellt werden, die komplexe Abläufe zu realisieren in der Lage ist.

Insbesondere ist bei dieser Ablaufsteuerung das "Routing" der Ein- und Ausgänge flexibler als im Stand der Technik. Sollte ein GPIO-Port 15 nicht ausreichen, so können weitere GPIO-Ports 15 hinzugeschaltet werden, wie es in Fig. 1 gezeigt bzw. angedeutet ist.

Die Fig. 1b, Fig. 1c und Fig. 1d zeigen eine Teildarstellung der oben beschriebenen, in der Fig. 1a nicht vollständig dargestellten Ausgestaltung mit je einem inaktiven 7,7' und zwei aktiven 6,6',6" Lesegeräten unter Einbeziehung einer angedeuteten Routingmatrix 100, umfassend einen ersten Teil 101 für die Ausgangssignale der Lesegeräte 6,6',6",7,7' und einem zweiten Teil 102 für die Ausgangssignale der Antennen 3,3'. Eine Routingverbindung ist dabei jeweils durch einen Punkt an der Kreuzung zweier Signalwege dargestellt.

Es ist dem Fachmann klar, dass eine solche Routingmatrix auch noch weitere Teile umfassen kann, sofern dies datentechnisch sinnvoll ist.

Die Fig. 1b zeigt zwei aktive Lesegeräte 6,6', nämlich ein erstes aktives Lesegerät 6 und ein zweites aktives Lesegerät 6', sowie ein inaktives Lesegerät 7. Die Antenneneingänge der beiden aktiven Lesegeräte 6,6' sind über den zweiten Teil 102 der Routingmatrix 100 mit den Ausgängen der Antennen 3, 3' verbunden. Die Ausgänge der aktiven Lesegeräte sind über den ersten Teil der Routingmatrix mit zwei Eingängen 121, 122 des Datenports 12 verbunden. Die entsprechenden Ein- und Ausgängen des inaktiven Lesegeräts 7 sind dagegen nicht geroutet. Diese Darstellung entspricht somit dem Normalzustand.

Die Fig. 1c zeigt die Situation bei einem Ausfall des ersten zuvor aktiven Lesegerätes 6. In dieser Darstellung ist nicht gezeigt, wie das zuvor inaktive Lesegerät 7 vom Managementsystem in Form einer Datenübertragung die Konfigurationsdaten des ausgefallenen Lesegerätes 6 erhält. Dafür ist aus dieser Darstellung jedoch besonders gut ersichtlich, wie das zuvor redundante Lesegerät 7 ein- und ausgangsseitig über die Routingmatrix 100 in den Signalfluss eingebunden wird, um das zuvor aktive Lesegerät 6 zu ersetzen. Das erste zuvor aktive Lesegerät 6 ist nun nicht mehr geroutet, wird folglich im Signalfluss nicht mehr benötigt, und kann nun durch ein neues redundantes Lesegerät 7'ersetzt werden. Dieser Austausch funktioniert unabhängig davon, welches der beiden aktiven Lesegeräte 6,6' ausgefallen ist, denn es ist leicht erkennbar, dass durch ein entsprechendes Routing auch das zweite aktive Lesegerät 6' bei einem Ausfall durch das inaktive Lesegerät 7 in gleicher Weise hätte ersetzt werden können. Somit ist auch mit einer nur geringen Redundanz, nämlich mit nur einem einzigen redundanten Lesegerät 7, eine Ausfallabsicherung für mehrere aktive Lesegeräte 6,6' gegeben.

Die Fig. 1d zeigt prinzipiell wieder einen Normalzustand, bei dem das neu hinzugekommene Lesegerät 7' nicht aktiv ist, also die Rolle des redundanten Lesegeräts 7 übernimmt. Gleichzeitig übernimmt das zuvor redundante Lesegerät 7 durch seine Aktivierung durch das Managementsystem, und insbesondere durch das LG-Selektormodul 9, die Rolle des ersten aktiven Lesegerätes 6 und kann nun als (drittes) aktives Lesegerät 6" bezeichnet werden.

Weiterhin könnte nun noch einmal die Funktion des neuen redundanten Lesegeräts 7' und des dritten aktiven Lesegeräts noch einmal vertauscht werden, um so wieder zur Ausgangssituation zurückzukehren, wie sie in Fig. 1b dargestellt ist.

Idealerweise wurde während des Ausfalls die Funktionalität des RFID-Kommunikationssystems 1 nicht beeinträchtig, da der Ausfall schnell erkannt wurde und das redundante Lesegerät somit bereits nach einer kurzen Konfigurationsdauer zur Verfügung stand.

Um einen solchen Ausfall möglichst schnell diagnostizieren zu können, kann beispielsweise ein Heardbeat-Bus 22 vorgesehen sein, der im Folgenden beschrieben wird.

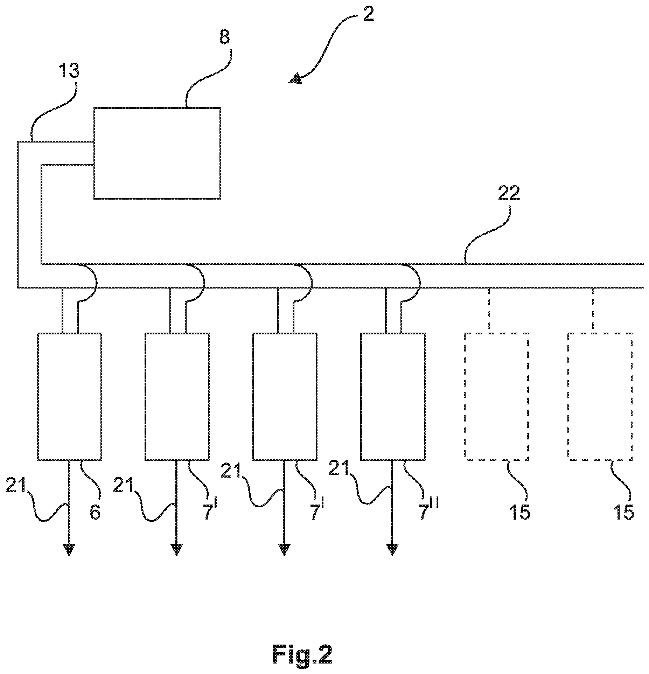

Die Fig. 2 zeigt dazu eine weitere Ausführungsform der Basisstation 2. Bei dieser Ausführungsform wird über einen Heartbeat-Bus 22 die Funktionsfähigkeit relevanter Komponenten des RFID-Kommunikationssystems 1 überprüft. In regelmäßigen Abständen werden von den Komponenten, insbesondere von den aktiven Lesegeräten 6 aber möglicherweise auch von den inaktiven Lesegeräten 7 oder auch von anderen Komponenten des RFID-Kommunikationssystems 1 an dem Heartbeat-Bus 22 Bereitschaftssignale ausgesendet, insbesondere sogenannte "Heartbeat-Signale", die von der Steuerungseinheit 8 empfangen und ausgewertet werden. Somit können die aktiven Lesegeräte 6 der Steuerungseinheit beispielsweise ihren Aktivitätszustand mitteilen, denn falls sie ausgefallen sind, scheiden sie in ihrer Funktion als aktive Lesegeräte aus. Sobald ein Bereitschaftssignal der aktiven Lesegeräte 6 oder auch anderer Komponenten des RFID-Kommunikationssystems 1 nicht oder nicht rechtzeitig eingeht, setzt die Steuerungseinheit 8 ein entsprechendes Alarmsignal ab, mit dem der Betreiber des RFID- Kommunikationssystems 1 über den Ausfall einer Komponente in der Basisstation 2 informiert wird. Weiterhin wird insbesondere das aktive Lesegerät 6 von der Steuerungseinheit 8 automatisch durch eines der inaktiven Lesegeräte 7 ersetzt, sobald das Lesegerät 6 selbst ausgefallen ist oder eine Störung anzeigt. Der Heard-Beat-Bus 22 kann dabei ein separater Bus sein oder ein Teil des LG-Selektorbusses 10. Die Lesegeräte 6, 7 sind über eigene Leitungen mit der Steuerungseinheit 8 verbunden oder, wie in Fig. 2 gezeigt, über eine gemeinsame Datenleitung 13. Weiterhin können, wie gestrichelt angedeutet, beispielsweise auch die GPIO-Ports 15 als weitere Komponenten der Basisstation 2 optional an den Heartbeat-Bus 22 angeschlossen sein.

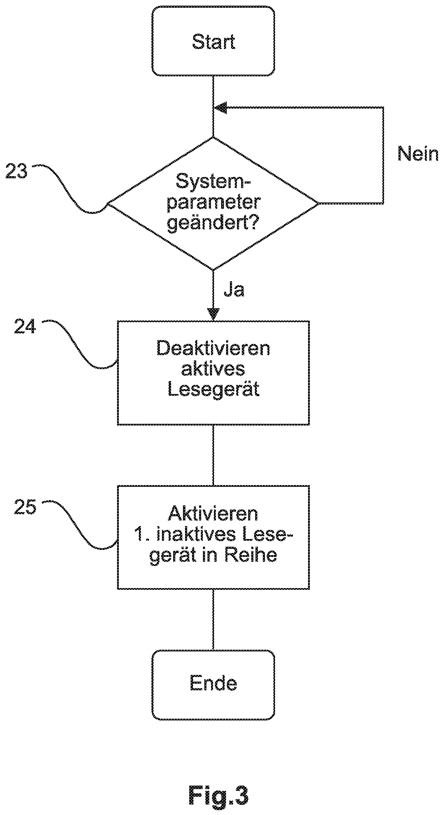

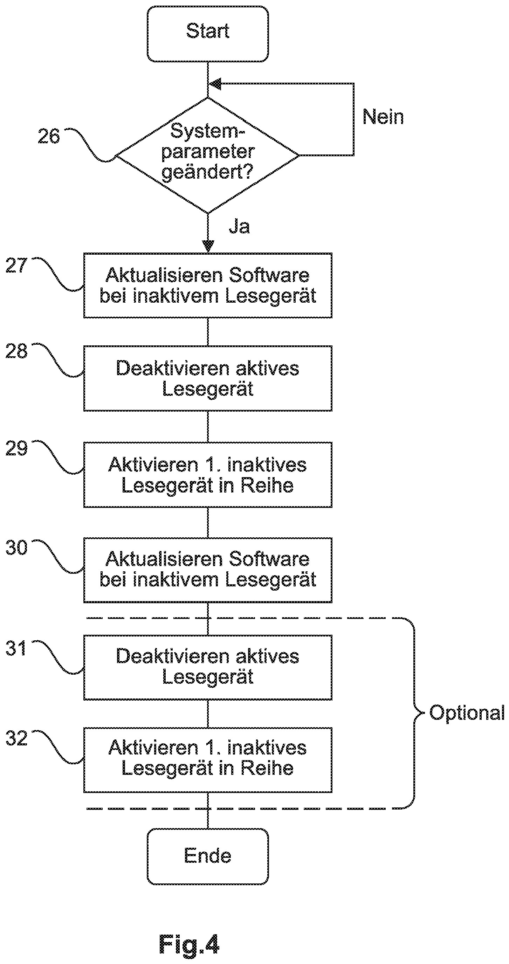

Der Ablauf eines oben beschriebenen Umschaltvorgangs wird im Folgenden anhand der Fig. 3 und 4 beschrieben.

In einer Ausführungsform des Verfahrens nach Fig. 3 fragt die Basisstation 2 mindestens einen Systemparameter ab, der ein Umschalten zwischen Lesegeräten 6, 7 in der Basisstation 2 auslöst. Der Systemparameter kann dabei das regelmäßige Signal auf dem Heartbeat-Bus 22 sein oder ein externes Schaltsignal an dem Schalteingang 20. Das externe Schaltsignal kann beispielsweise eine Änderung der vorgegebenen Kommunikationsfrequenz oder eine Änderung einer Betriebsprogrammversion bei einem oder mehreren der aktiven Lesegeräte 6 anzeigen.

Die Abfrage des Systemparameters wird als Schritt 23 ausgeführt. Hat sich der überwachte Systemparameter nicht geändert, d.h. kommen regelmäßig die erwarteten Bereitschaftssignale auf dem Heartbeat-Bus 22 an bzw. liegt überhaupt kein Befehl an dem externen Schalteingang 20 an, so springt das Verfahren zurück und wiederholt die Abfrage nach einer Änderung des Systemparameters, auf die reagiert werden muss.

Sobald sich der Systemparameter geändert hat und das Auswechseln des aktiven Lesegerätes 6 in Schritt 23 erkannt wird, wird das aktive Lesegerät 6 in Schritt 24 deaktiviert. Unmittelbar im Anschluss daran wird das inaktive (redundante) Lesegerät 7 in Schritt 25 aktiviert. Dabei wird dasjenige Gerät aktiviert, welches als nächstes einzusetzende Gerät gekennzeichnet ist, wenn mehrere Ersatzgeräte zur Auswahl stehen. Mit anderen Worten, bei mehr als einem inaktiven Lesegerät 7, 7',7",... wird durch die Steuerungseinheit 8 das nächste Lesegerät 7' in einer vorgegebenen Reihenfolge aktiviert. Mit der Aktivierung eines Gerätes geht jeweils eine Übernahme der Konfiguration des ausgefallenen aktiven Lesegerätes 6 durch Übertragung der Konfigurationsdaten aus dem Speicher des Managementsystems einher. Daher kann diese Übertragung auch erfolgen, nachdem das zuvor aktive Lesegerät 6 ausgefallen ist. Diese Konfigurationsdaten können beispielsweise die Anzahl der verwendeten Antennen, die maximal zulässige Sendeleistung, die Antennenausgangsleistung, die Empfangsempfindlichkeit, der gewählten Frequenzbereich sowie zeitliche Einschränkungen für das Lesen und/oder senden, z.B. die "listen before talk"-Funktion, sowie weitere anwendungsspezifische Parameter betreffen, welche dem Fachmann bekannt sind.

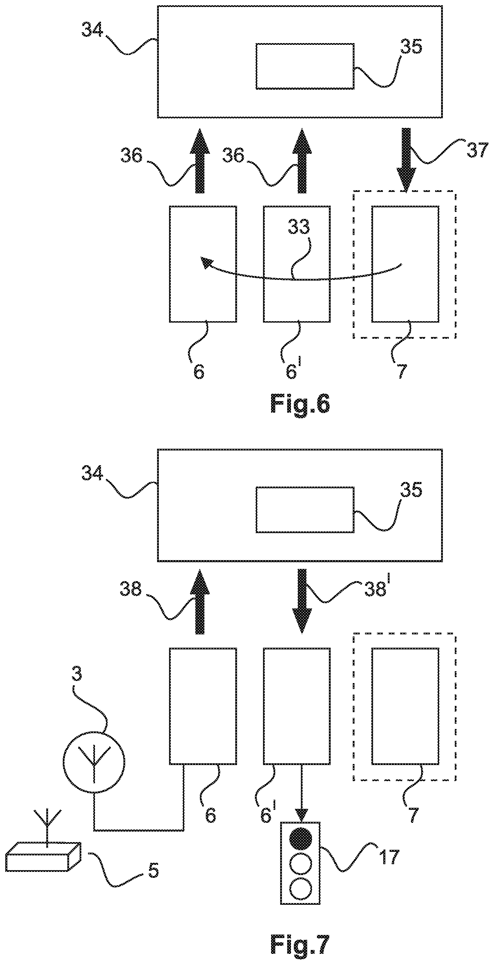

Derartige Konfigurationsdaten sind dazu bereits vor diesem Ausfall in dem Speicher des Managementsystems, beispielsweise im Programm/Datenspeicher 19 oder in einem weiter unten in den Fig. 6 und 7 erläuterten Zwischenspeicher 35, z.B. einem Speicher des LG-Selektormoduls 9, abgelegt sein und werden an das zuvor deaktive (redundante) 7 und nun aktivierte 6" Lesegerät übertragen.

In seiner Grundgestalt ist das Verfahren nach dem Austausch eines Lesegeräts damit abgeschlossen, und das Verfahren wird beendet bzw. springt zu der Abfrage 23 zurück (nicht dargestellt).

Um beim Austausch und Umschalten von Geräten jegliche Totzeit zu vermeiden, kann es vorgesehen sein, dass das Aktivieren 25 des inaktiven Lesegerätes 7 vor dem Deaktivieren 24 des aktiven Lesegerätes 6 erfolgt. Dieses Verfahren bietet sich insbesondere bei einem geplanten Ausfall eines aktiven Lesegerätes 6 an, der beispielsweise vorgesehen ist, um an diesem Lesegerät ein Firmwareupdate oder eine Aktualisierung der Betriebssoftware durchzuführen.

Damit sind während einer vorgegebenen Dauer zwei Lesegeräte aktiv. Es versteht sich jedoch, dass in dieser Zeitspanne das Ausgangssignal nur von einem der beiden aktiven Lesegeräte durch die Basisstation 2 ausgegeben wird. Die Ausgabe der Daten erfolgt wie bereits oben beschrieben an ein oder mehrere Ausgabegeräte 16, 17, 18 über den oder die GPIO-Ports 15.

Bei einem nicht planbaren Ausfall eines aktiven Lesegerätes 6, der beispielsweise durch einen fundamentalen Soft- oder Hardwarefehler verursacht werden kann, ist die Totzeit im Wesentlichen abhängig von dem Erkennen dieses Ausfalls und weiterhin von der Dauer des Umkonfigurierens des redundanten Lesegerätes 7. Wie bereits erwähnt, findet dieses Umkonfigurieren durch das Aufspielen der Konfigurationsdaten des ausgefallenen Lesegeräts aus dem Speicher des Managementsystems, beispielsweise dem Programm/Datenspeicher 19 oder einem in den Fig. 6 und Fig. 7 gezeigten Zwischenspeicher 35, auf das inaktive (redundante) Lesegerät 7, das daraufhin aktiviert und zum aktiven Lesegerät 6 wird. Der in den Fig. 6 und Fig. 7 gezeigte Zwischenspeicher 35 kann beispielsweise integrativer Bestandteil der Basisstation 2, bevorzugt der Steuerungseinheit 8 und beispielsweise des LG-Selektormodul 9 sein.

Die Fig. 4 stellt anhand eines Flussdiagramms ein spezielles Verfahren zur Aktualisierung der Software, insbesondere der Firmware, eines aktiven Lesegerätes 6 dar.

Bei Änderung der sogenannten "Firmware", also einer grundlegenden Betriebssoftware, die alle Lesegeräte betrifft, wird diese entsprechend an jeweils inaktive Lesegeräte übermittelt. Damit jedoch alle Lesegeräte, d.h. inaktive 7 wie auch aktive Lesegeräte 6 von der Aktualisierung der Firmware profitieren, kann, wie im Folgenden geschildert, eine doppelte Umschaltung erfolgen. Dabei ist das entsprechende Routing der entsprechenden Ein- und Ausgangssignale nicht gezeigt, das bereits in den Fig. 1b,c,d dargestellt wurde und auf diese Ausführung übertragen werden kann.

Zunächst wird in Schritt 26 die Änderung eines Systemparameters abgefragt. In diesem Fall wird konkret auf einen externen Befehl am Schalteingang 20 gewartet, die Firmware zu aktualisieren. Bei Eingang eines solchen Befehls wird in Schritt 27 unmittelbar die Aktualisierung der Firmware bei zumindest einem, bevorzugt allen inaktiven Lesegeräten 7 vorgenommen. Anschließend wird in Schritt 28 das gerade aktive Lesegerät 6 deaktiviert, und in Schritt 29 wird vorzeitig, gleichzeitig oder mit einer minimalen Verzögerung ein inaktives Lesegerät 7 aktiviert. Bei dem deaktivierten Lesegerät, vormals 6, wird nun in Schritt 30 kann nun ebenfalls eine Aktualisierung der Firmware vorgenommen werden, so dass nun alle Lesegeräte auf dem neuesten Stand in Bezug auf die generelle Firmware sind.

Das Verfahren kann damit beendet werden.

Um jedoch wieder den Zustand des Systems vor der Aktualisierung der Software zu erreichen, kann in Schritt 31 das gerade aktive Lesegerät 6" auch wieder deaktiviert und in Schritt 32 ein inaktives Lesegerät aktiviert werden. Es versteht sich, dass das in Schritt 32 aktivierte Lesegerät entweder das ursprünglich aktive Lesegerät 6 (sofern wieder funktionsfähig, z.B. nach einem Softwareupdate) bzw. ein dafür eingesetztes Austauschgerät 7' (z.B. nach einem Defekt) ist.

Mit Schritt 32 ist der ursprüngliche Zustand des RFID-Kommunikationssystems 1 wieder erreicht, und das Verfahren kann nun endgültig beendet werden.

Die Erfindung ist nicht auf die obigen Ausführungsbeispiele beschränkt. Weitere Konstellationen sind denkbar. So ist bei einer (nicht gezeigten) weiteren Ausführungsform beim Ausfall eines Lesegerätes der folgende Ablauf vorgesehen, mit dem eine besonders schnelle Reaktion zur Sicherstellung eines unterbrechungsfreien Betriebes gewährleistet ist: Das System mit einer Vielzahl von Lesegeräten 6,7, 6',7',... ist so aufgeteilt, dass jeweils zwei oder mehr Lesegeräte 6,7 zu einer redundanten Einheit zusammengefasst sind. Insgesamt beträgt die Anzahl solcher Einheiten m, so dass dem System funktional m Lesegeräteinheiten zur Verfügung stehen. Zusätzlich gibt es noch ein weiteres " (zusätzliches redundantes) Lesegerät 7ₘ₊₁. Die Anzahl n redundanter Lesegeräte beträgt somit n = m+1. Zwei zueinander "parallel geschaltete" Lesegeräte 6,7, nämlich jeweils ein aktives 6 und ein redundantes 7 Lesegerät, besitzen jeweils die gleiche Konfiguration. Ihre Funktion wird von dem Managementsystem mittels einer "Heardbeat-Funktion" überprüft. Wenn das aktive Lesegerät 6 ausfällt, dann wird dies dem Betreiber des Systems gemeldet. Das redundante Lesegerät 7 führt den Betrieb weiter. Gleichzeitig werden die dazugehörigen Konfigurationsdaten an das dritte redundante Lesegerät 7ₙ₊₁ übertragen, das daraufhin - evtl. nach kurzer Zeit - als redundantes Lesegerät zur Verfügung steht, während das ausgefallene (zuvor aktive) Lesegerät 6 z.B. ausgebaut und überprüft werden kann. Gleichzeitig sollte dann wieder ein weiteres Lesegerät als "neues drittes" Lesegerät 7ₙ₊₁ eingebaut werden, um den Ausgangszustand möglichst schnell wieder herzustellen. Somit lässt sich mit vergleichsweise geringem Hardwareaufwand ein hohes Maß an Ausfallsicherheit und insbesondere eine sehr schnelle Reaktionszeit nach einem Ausfall erzielen, da das Übertragen der Konfigurationsdaten und ggf. auch des Routings dabei zunächst entfällt.

Weiterhin ist, wie oben bereits ausführlich beschrieben, auch eine kostengünstige Variante vorgesehen, bei welcher die Basisstation 2 mehr aktive 6 als inaktive 7 Lesegeräte und insbesondere mehrere aktive Lesegeräte 6 und nur ein einziges inaktives Lesegerät 7 aufweist. Das inaktive Lesegerät 7 kann dann dazu vorgesehen sein, bei Bedarf ein jeweils gerade ausgefallenes aktives Lesegerät 6 zu ersetzen. In einer solchen alternativen Ausführungsform ist für jedes aktive Lesegerät 6 zumindest eine dazugehörige Antenne 3 und ein eigenes dazugehöriges überwachtes Gebiet 4 vorgesehen, wobei diese Gebiete 4 sich gegenseitig nicht überschneiden um eine Mehrfachdetektion eines bestimmten RFID-Transponders 5 zu vermeiden.

Weiterhin kann ein Kompromiss zwischen einer guten Redundanz und den dazugehörigen Kosten in einer frei wählbaren Zusammenstellung aktiver Lesegeräte 6 und inaktiver Lesegeräte 7 bestehen, wobei eine beliebige erste Anzahl m aktiver Lesegeräte 6 in einer Basisstation 2 mit einer beliebigen zweiten Anzahl n inaktiver (redundanter) Lesegeräte 7 je nach Bedarf kombiniert werden kann.

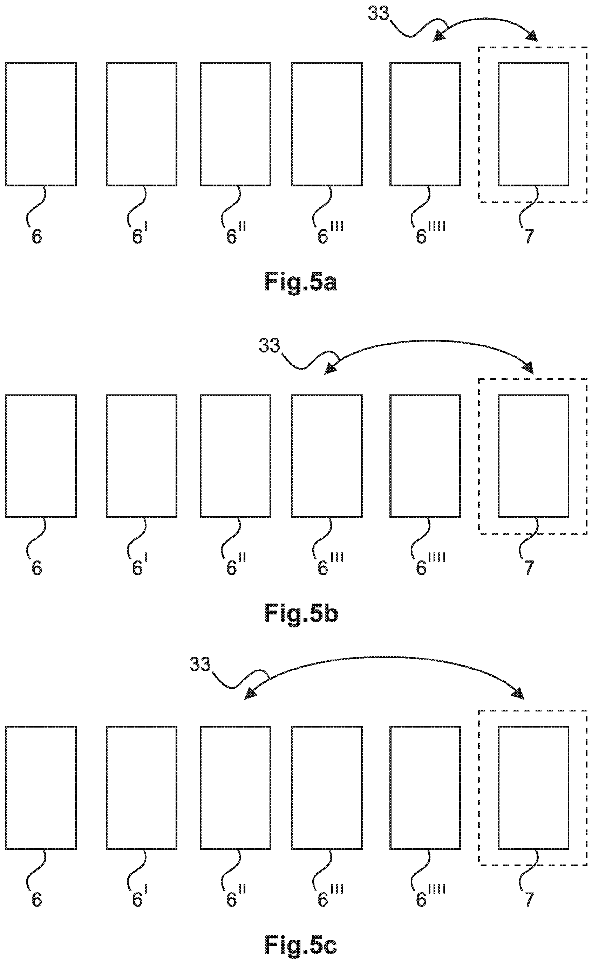

Im Folgenden werden anhand der Fig. 5 bis 7 Beispiele für die Konfiguration von aktiven und inaktiven Lesegeräten gemäß der vorliegenden Erfindung und dem Stand der Technik erläutert.

In den Fig. 5a, 5b und 5c ist eine mögliche Konstellation von aktiven 6 und inaktiven Lesegeräten 7 mit drei alternativen Austauschvorgängen gezeigt. In dem Beispiel sind fünf aktive Lesegeräte 6,6',6",6''',6'''', nämlich ein erstes aktives Lesegerät 6, ein zweites aktives Lesegerät 6', ein drittes aktives Lesegerät 6", ein viertes aktives Lesegerät 6''' und ein fünftes aktives Lesegerät 6'''' sowie ein einziges inaktives Lesegerät 7 dargestellt. In der Fig. 5 a wird das fünfte Lesegerät 6'''' durch das bislang inaktive Lesegerät 7 ersetzt. Dieser Austauschvorgang von aktivem und inaktivem Lesegerät 6'''' bzw. 7 ist durch einen Doppelpfeil 33 angedeutet. Da der Austauschvorgang 33 nicht auf das Ersetzen des Lesegerätes 6'''' durch das bislang inaktive Lesegerät 7 beschränkt ist, ist in der Fig. 5b der Austausch 33 des vierten Lesegerätes 6''' mit dem bislang inaktiven Lesegerät 7 gezeigt. In Fig. 5c ist der Austausch 33 des dritten Lesegerätes 6" mit dem bislang inaktiven Lesegerät 7 gezeigt. Die Gesamtheit der Lesegeräte 6 mit fünf Einzelgeräten 6,6',6",6''',6'''' greift somit auf nur ein einziges (redundantes) Ersatzgerät 7 zurück. Es versteht sich, dass statt nur einem Ersatzgerät 7 auch mehrere Ersatzgeräte 7,7',7" bereitgehalten werden können, um die Redundanz zu erhöhen, so dass auch für den Ausfall mehrerer aktiver Lesegeräte 6 gesorgt ist.

Der bei dem beschriebenen Austausch 33 von Lesegeräten stattfindende Datenverkehr zwischen den mehreren aktiven 6,6' und inaktiven Lesegeräten 7 und dem Managementsystem ist in der Fig. 6 gezeigt. In einem ersten Datentransfer 36 werden zunächst in einem Zwischenspeicher 35 des Managementsystems 34 die individuellen Konfigurationsdaten jedes einzelnen aktiven Lesegeräts 6,6' gespeichert. Falls die Konfigurationsdaten noch nicht im Zwischenspeicher 35 vorhanden sind, werden sie durch den Datentransfer 36 in den Zwischenspeicher 35 hochgeladen. Dies erfolgt für jedes der aktiven Lesegeräte 6,6' unabhängig voneinander.

Soll nun das erste aktive Lesegerät 6 aufgrund eines unvorhersehbaren Ausfalls durch das inaktive Lesegerät 7 ersetzt werden, so werden zunächst die dazugehörigen Konfigurationsdaten aus dem Konfigurationsdatenspeicher 35 des Managementsystems 34 durch den Datentransfer 37 in das bislang inaktive (redundante) Lesegerät 7 übertragen. Damit ist sichergestellt, dass das bislang inaktive Gerät 7 so eingestellt ist, dass es die Aufgaben des zu ersetzenden Lesegerätes 6 nach seiner Aktivierung nahtlos übernehmen kann.

Die Fig. 7 zeigt einen Datenverkehr zwischen mehreren aktiven 6,6' und inaktiven 7 Lesegeräten und dem erfindungsgemäßen Managementsystem 34 zur Übertragung von Signaldaten, die von dem RFID-Transponder 5 stammen und beispielsweise die Zugangskontrolleinrichtung 17 steuern. Dabei werden diese Signaldaten zwar von dem ersten Lesegerät 6 mit der daran angeschlossenen Antenne 3 empfangen, aber über das Managementsystem 34 an das zweite aktive Lesegerät 6' übertragen und von diesem 6' an dessen Ausgang zum Steuern einer Zugangskontrolleinrichtung 17 zur Verfügung gestellt.

Dies ist besonders vorteilhaft, weil dadurch die Ports aller aktiven Lesegeräte 6,6',... sämtlichen aktiven Lesegeräten 6,6',... zur Verfügung stehen. Beispielsweise kann das erste aktive Lesegerät 6 über eine entsprechende Datenübertragung 38 Signaldaten zur Steuerung einer Zugangskontrolleinrichtung 17 an das Managementsystem 34 senden. Daraufhin können die Signaldaten vom Managementsystem 34 durch eine weitere Datenübertragung 38' an das zweite aktive Lesegerät 6' übertragen werden und die daran angeschlossene Zugangskontrolleinrichtung 17 steuern. Somit weist das Managementsystem 34 auch für die Signaldaten funktional einen weiteren Teil der Routing-Matrix 100 auf, der dazu geeignet ist, Signaldaten von dem mindestens einen RFID-Transponder 5 zwischen mindestens zwei aktiven Lesegeräten 6,6'und gegebenenfalls auf deren Ausgänge zu übertragen. Somit handelt es sich dabei um eine Routing-Matrix für Ein- und Ausgänge sämtlicher aktiver Lesegeräte 6, über welche die Signaldaten des Transponders 5 von einem Lesegerät 6 empfangen und frei konfigurierbar auf die freien Ausgänge auch anderer aktiver Lesegeräte 6',6",6''',6''''... übertragen werden können. Dies ist besonders vorteilhaft, weil die Ressourcen sämtlicher aktiver Lesegeräte 6 dadurch effektiver genutzt werden können.

### Bezugszeichen

- 1: RFID-Kommunikationssystem
- 2: Basisstation
- 3: Antenne
- 4: Kommunikationsbereich
- 5: RFID-Transponder
- 6: aktives Lesegerät
- 7: inaktives Lesegerät
- 8: Steuerungseinheit
- 9: LG-Selektormodul
- 10: LG-Selektorbus
- 11: Antennen-Switch
- 12: Datenport, 12a Ausgabebus, 12b interner Bus
- 121,122: Eingänge des Datenports
- 13: Datenleitung
- 14: externe Datenbank, Middlewareeinrichtung
- 15: GPIO-Port, 15a GPIO-Kontakt
- 16: Ausgabegerät mit Anzeigevorrichtung von GPIO, 16a erster Bus, 16b zweiter Bus
- 17: Zugangskontrolle von GPIO
- 18: Verriegelungseinrichtung von GPIO
- 19: Programm/Datenspeicher, 19a Speicherbus
- 20: externer Schalteingang
- 21: Antennenausgänge
- 22: Heartbeat-Bus
- 23: Änderung von Systemparameter?
- 24: Deaktivieren des aktiven Lesegerätes
- 25: Aktivieren eines inaktiven Lesegerätes
- 26: Änderung von Systemparameter?
- 27: Aktualisieren von Software bei inaktivem LG
- 28: Deaktivieren des aktiven Lesegerätes
- 29: Aktivieren eines inaktiven Lesegerätes
- 30: Aktualisieren von Software bei inaktivem LG
- 31: Deaktivieren des aktiven Lesegerätes
- 32: Aktivieren eines inaktiven Lesegerätes
- 33: Austausch von aktivem und inaktivem Lesegerät
- 34: Managementsystem
- 35: Zwischenspeicher, Konfigurationsdatenspeicher
- 36: Datentransfer der Konfigurationsdaten vom aktiven Lesegerät in das Managementsystem
- 37: Datentransfer der Konfigurationsdaten vom Managementsystem in das inaktive Lesegerät
- 38: Übertragung von Signaldaten des RFID-Transponders zwischen den Lesegeräten und dem Managementsystem

- 100: Routingmatrix
- 101 / 102: Teile der Routingmatrix

## Patentansprüche

1. RFID-Kommunikationssystem, das umfasst:
mindestens ein aktives Lesegerät (6) zum Identifizieren mindestens eines RFID-Transponders (5) und mindestens ein inaktives Lesegerät (7), **dadurch gekennzeichnet, dass** das RFID-Kommunikationssystem (1) weiterhin ein Managementsystem (34) besitzt, das Folgendes aufweist:
- mindestens einen Managementdatenbus (10,13), über den das Management-System mit den Lesegeräten (6,7) in bidirektionalem Datenaustausch steht;
- mindestens einen Speicher (19,35) zum Hochladen (36) und Abspeichern von Konfigurationsdaten aus jedem aktiven Lesegerät (6),
- mindestens eine Steuerungseinheit (8)
o zum Abfragen eines Aktivitätszustandes bei jedem aktiven Lesegerät (6) in regelmäßigen Zeitintervallen,
o bei Ausfall eines aktiven Lesegerätes (6) zum Identifizieren des ausgefallenen Lesegerätes (6) und Laden (37) der Konfigurationsdaten des ausgefallenen Lesegerätes (6) aus dem Speicher (19,35) in ein vorgegebenes inaktives Lesegerät (7) und
o zum Aktivieren des vorgegebenen inaktiven Lesegerätes (7) zum Identifizieren des mindestens einen RFID-Transponders (5) anstelle des ausgefallenen Lesegerätes (6).

2. RFID-Kommunikationssystem nach Anspruch 1, **dadurch gekennzeichnet, dass** das Managementsystem (34) eine digitale Routingmatrix (100) umfasst, die dazu dient, die Ein- und Ausgänge einzelner Komponenten des RFID-Kommunikationssystems (1), beispielsweise die Ausgänge der Antennen (3,3') und die Antenneneingängen der Lesegeräte (6,7) und/oder die Ausgänge der Lesegeräte (6,7) und die Eingänge (121,122) des Datenports (12), im Signalfluss miteinander zu verbinden und voneinander zu trennen.

3. RFID-Kommunikationssystem nach Anspruch 2, **dadurch gekennzeichnet, dass** die Routing-Matrix (100) weiterhin dazu geeignet ist, Signaldaten von dem mindestens einen RFID-Transponder (5) zwischen mindestens zwei aktiven Lesegeräten (6) und insbesondere vom Eingang eines aktiven Lesegerätes (6) auf den Ausgang eines anderen aktiven Lesegerätes (6) zu übertragen.

4. RFID-Kommunikationssystem nacheinem der vorstehenden Ansprüche, **dadurch gekennzeichnet, dass** die Anzahl (n) der inaktiven Lesegeräte (7) kleiner ist als die Anzahl (m) der aktiven Lesegeräte (6).

5. RFID-Kommunikationssystem nach einem der Ansprüche 1 bis 3, **dadurch gekennzeichnet, dass** die Anzahl (n) der inaktiven Lesegeräte (7) gleich der Anzahl (m) der aktiven Lesegeräte (6) ist.

6. RFID-Kommunikationssystem nach einem der Ansprüche 1 bis 3, **dadurch gekennzeichnet, dass** die Anzahl (n) der inaktiven Lesegeräte (7) größer ist als die Anzahl (m) der aktiven Lesegeräte (6).

7. RFID-Kommunikationssystem nach einem der vorstehenden Ansprüche, **dadurch gekennzeichnet, dass** das Managementsystem eine Steuerungseinheit (8) umfasst und dass die Steuerungseinheit (8) ein Lesegerät-Selektormodul (9) umfasst, wobei das Lesegerät-Selektormodul (9) über einen LG-Selektorbus (10) an die Lesegeräte (6,7) angeschlossen ist, um die Lesegeräte (6,7) darüber aktivieren und deaktivieren zu können.

8. RFID-Kommunikationssystem nach Anspruch 7, **dadurch gekennzeichnet, dass** die Steuerungseinheit (8) mindestens einen GPIO-Port (15) umfasst, der zum Ausgeben von mindestens einem Ausgangssignal in Abhängigkeit von einem Identifizierungssignal des mindestens einen RFID-Transponders (5) an ein oder mehrere Ausgabegeräte (16,17,18) und/oder zum Übermitteln von Software / Firmware an inaktive Lesegeräte geeignet ist.

9. RFID-Kommunikationssystem nach einem der vorstehenden Ansprüche, **dadurch gekennzeichnet, dass** das RFID-Kommunikationssystem (1) eine Basisstation (2) mit mindestens zwei inaktive Lesegeräte (7) umfasst und die Steuerungseinheit (8) ausgelegt ist zum Aktivieren der mindestens zwei inaktiven Lesegeräte (7) in einer vorgegebenen Reihenfolge.

10. RFID-Kommunikationssystem nach Anspruch 9, **dadurch gekennzeichnet, dass** die Steuerungseinheit (8) ausgelegt ist zum Aktivieren des oder eines inaktiven Lesegerätes (7) vor dem Deaktivieren des oder eines aktiven Lesegerätes (6), so dass während einer vorgegebenen Dauer zumindest zwei Lesegeräte (6,7) aktiv sind, wobei das Ausgangssignal nur von einem dieser beiden aktiven Lesegeräte durch die Basisstation ausgegeben wird.

11. RFID-Kommunikationssystem nach einem der vorangehenden Ansprüche, **dadurch gekennzeichnet, dass** das Kommunikationssystem einen externen Schalteingang (20) für ein externes Schaltsignal als Systemparameter aufweist.

12. RFID-Kommunikationssystem nach Anspruch 11, **dadurch gekennzeichnet, dass** das externe Schaltsignal dazu geeignet ist, eine Änderung einer vorgegebenen Kommunikationsfrequenz anzuzeigen.

13. RFID-Kommunikationssystem nacheinem der Ansprüche 11 bis 12, **dadurch gekennzeichnet, dass** das externe Schaltsignal dazu geeignet ist, eine Änderung einer Betriebsprogrammversion bei einem oder mehreren der Lesegeräte (6,7) anzuzeigen.

14. RFID-Kommunikationssystem nach einem der vorangehenden Ansprüche, **dadurch gekennzeichnet, dass** das RFID-Kommunikationssystem (1) ein Heartbeat-Signal (22) als ein Bereitschaftssignal von allen Lesegeräten (6,7) als Systemparameter aufweist.

15. Verfahren zum Steuern eines RFID-Kommunikationssystems (1) mit mindestens einem aktiven Lesegerät (6), das zum Identifizieren von mindestens einem RFID-Transponder (5) geeignet ist, und mit mindestens einem inaktiven Lesegerät (7), **dadurch gekennzeichnet, dass** das Verfahren die folgenden Schritte aufweist:
- Hochladen (36) und Abspeichern von Konfigurationsdaten aus jedem aktiven Lesegerät (6) in einen Speicher (19,35) des Managementsystems (34),
- Abfragen eines Aktivitätszustandes bei jedem aktiven Lesegerät (6) durch eine Steuerungseinheit (8) in regelmäßigen Zeitintervallen und
- bei Ausfall eines aktiven Lesegerätes (6) Identifizieren des ausgefallenen Lesegerätes (6) und Laden (37) der Konfigurationsdaten des ausgefallenen Lesegerätes (6) aus dem Speicher (19,35) in ein vorgegebenes inaktives Lesegerät (7) und
- Aktivieren des vorgegebenen inaktiven Lesegerätes (7) zum Identifizieren des mindestens einen RFID-Transponders (5) anstelle des ausgefallenen Lesegerätes (6).

16. Verfahren gemäß Anspruch 15, **dadurch gekennzeichnet, dass** beim Aktivieren des vorgegebenen inaktiven Lesegerätes (7) der folgende Verfahrensschritt ausgeführt wird:
- Routen der Ein- und/oder Ausgänge des zuvor inaktiven Lesegerätes (7) über eine Routing-Matrix (100) zum Ersetzen des ausgefallenen, zuvor aktiven Lesegeräts (6) im Signalfluss des RFID-Kommunikationssystems (1).

17. RFID-Kommunikationssystem nach einem der Ansprüche 15 bis 16, **dadurch gekennzeichnet, dass** das RFID-Kommunikationssystem (1) Signaldaten von dem wenigstens einen RFID-Transponder (5) zwischen wenigstens zwei aktiven Lesegeräten (6,6') übermittelt.

18. Verfahren nach einem der Ansprüche 15 bis 17, **dadurch gekennzeichnet, dass** das Aktivieren (25) von mindestens zwei inaktiven Lesegeräten (7) durch die Steuerungseinheit (8) in einer vorgegebenen Reihenfolge erfolgt.

19. Verfahren nach einem der Ansprüche 15 bis 18, **dadurch gekennzeichnet, dass** ein externes Schaltsignal als Systemparameter abgefragt wird.

20. Verfahren nach Anspruch 19, **dadurch gekennzeichnet, dass** das externe Schaltsignal eine Änderung einer Betriebsprogrammversion bei einem oder mehreren der Lesegeräte anzeigt.

21. Verfahren nach einem der Ansprüche 19 bis 20, bei dem als Systemparameter ein Bereitschaftssignal von Komponenten (6,7,11,12,15,...) des RFID-Kommunikationssystems (1) und insbesondere der jeweilige Aktivitätszustand von den aktiven Lesegeräten (6) abgefragt wird, wobei das Bereitschaftssignal insbesondere ein Heartbeat-Signal ist.

## Claims

1. RFID communication system, which comprises:
at least one active reader (6) for identifying at least one RFID transponder (5), and at least one inactive reader (7), **characterized in that** the RFID communication system (1) also comprises a management system (34), which comprises the following:
- at least one management data bus (10,13), via which the management system is in bidirectional data communication with the readers (6,7);
- at least one memory (19,35) for uploading (36) and storing configuration data from each active reader (6);
- at least one control unit (8)
o for polling an activity status for each active reader (6) at regular time intervals,
o in the event of an active reader (6) failing, for identifying the failed reader (6) and loading (37) the configuration data for the failed reader (6) from the memory (19, 35) into a specified inactive reader (7), and
o for activating the specified inactive reader (7) in place of the failed reader (6) to identify the at least one RFID transponder (5).

2. RFID communication system according to Claim 1, **characterized in that** the management system (34) comprises a digital routing matrix (100), which is used to connect to one another or disconnect from one another in the signal flow the inputs and outputs of individual components of the RFID communication system (1), for instance the outputs of the antennas (3,3') and the antenna inputs of the readers (6, 7), and/or the outputs of the readers (6, 7) and the inputs (121, 122) of the data port (12).

3. RFID communication system according to Claim 2, **characterized in that** the routing matrix (100) is additionally suitable for transferring signal data from the at least one RFID transponder (5) between at least two active readers (6), and in particular from the input of an active reader (6) to the output of another active reader (6).

4. RFID communication system according to any of the preceding claims, **characterized in that** the number (n) of inactive readers (7) is less than the number (m) of active readers (6).

5. RFID communication system according to any of Claims 1 to 3, **characterized in that** the number (n) of inactive readers (7) equals the number (m) of active readers (6).

6. RFID communication system according to any of Claims 1 to 3, **characterized in that** the number (n) of inactive readers (7) is greater than the number (m) of active readers (6).

7. RFID communication system according to any of the preceding claims, **characterized in that** the management system comprises a control unit (8), and that the control unit (8) comprises a reader-selector module (9), wherein the reader-selector module (9) is connected via a reader-selector bus (10) to the readers (6,7) in order to be able to activate and deactivate the readers (6,7) by said means.

8. RFID communication system according to Claim 7, **characterized in that** the control unit (8) comprises at least one GPIO port (15), which is suitable for outputting at least one output signal to one or more output devices (16,17,18) according to an identification signal from the at least one RFID transponder (5) and/or for transferring software/firmware to inactive readers.

9. RFID communication system according to any of the preceding claims, **characterized in that** the RFID communication system (1) comprises a base station (2) having at least two inactive readers (7), and the control unit (8) is designed to activate the at least two inactive readers (7) in a specified sequence.

10. RFID communication system according to Claim 9, **characterized in that** the control unit (8) is designed to activate the or an inactive reader (7) before deactivating the or an active reader (6), with the result that at least two readers (6, 7) are active during a specified period, wherein the base station outputs the output signal only from one of these two active readers.

11. RFID communication system according to any of the preceding claims, **characterized in that** the communication system has an external switching input (20) for an external switching signal as a system parameter.

12. RFID communication system according to Claim 11, **characterized in that** the external switching signal is suitable for indicating a change in a specified communication frequency.

13. RFID communication system according to either Claim 11 or Claim 12, **characterized in that** the external switching signal is suitable for indicating a change in an operating program version for one or more of the readers (6,7).

14. RFID communication system according to any of the preceding claims, **characterized in that** the RFID communication system (1) has as a system parameter a heartbeat signal (22) as a ready signal from all the readers (6,7).

15. Method for controlling an RFID communication system (1) comprising at least one active reader (6), which is suitable for identifying at least one RFID transponder (5), and comprising at least one inactive reader (7), **characterized in that** the method comprises the following steps:
- uploading (36) and storing configuration data from each active reader (6) into a memory (19,35) of the management system (34);
- a control unit (8) polling an activity status for each active reader (6) at regular time intervals and
- in the event of an active reader (6) failing, identifying the failed reader (6) and loading (37) the configuration data for the failed reader (6) from the memory (19, 35) into a specified inactive reader (7); and
- activating the specified inactive reader (7) in place of the failed reader (6) to identify the at least one RFID transponder (5).

16. Method according to Claim 15, **characterized in that** on activation of the specified reader (7), the following method step is performed:
- a routing matrix (100) routing the inputs and/or outputs of the previously inactive reader (7) in order to replace the failed, previously active reader (6) in the signal flow of the RFID communication system (1).

17. RFID communication system according to either Claim 15 or Claim 16, **characterized in that** the RFID communication system (1) transfers signal data from the at least one RFID transponder (5) between at least two active readers (6,6').

18. Method according to any of Claims 15 to 17, **characterized in that** the control unit (8) activates (25) at least two inactive readers (7) in a specified sequence.

19. Method according to any of Claims 15 to 18, **characterized in that** an external switching signal is polled as a system parameter.

20. Method according to Claim 19, **characterized in that** the external switching signal indicates a change in an operating program version for one or more of the readers.

21. Method according to either Claim 19 or Claim 20, in which as the system parameter, a ready signal from components (6,7,11,12,15,...) of the RFID communication system (1), and in particular the activity status of each of the active readers (6), is polled, wherein the ready signal is in particular a heartbeat signal.

## Revendications

1. Système de communication RFID comprenant :
au moins un appareil de lecture actif (6) destiné à identifier au moins un répéteur RFID (5) et au moins un appareil de lecture inactif (7), **caractérisé en ce que** le système de communication RFID (1) comporte en outre un système de gestion (34) qui comprend :
- au moins un bus de données de gestion (10, 13) par l'intermédiaire duquel le système de gestion échange des données de manière bidirectionnelle avec les appareils- de lecture (6, 7) ;
- au moins une mémoire (19, 35) destinée au téléchargement (36) et au stockage des données de configuration provenant de l'appareil de lecture actif (6),
- au moins une unité de commande (8) destinée
∘ à demander un état d'activité de chaque appareil de lecture actif (6) à des intervalles de temps réguliers,
∘ en cas de panne d'un appareil de lecture actif (6), à identifier l'appareil de lecture en panne (6) et charger (37) les données de configuration de l'appareil de lecture actif (6) en panne depuis la mémoire (19, 35) vers un appareil de lecture inactif (7) prédéterminé, et
∘ à activer l'appareil de lecture inactif (7) prédéterminé pour identifier ledit au moins un répéteur RFID (5) au lieu de l'appareil de lecture (6) en panne.

2. Système de communication RFID selon la revendication 1, **caractérisé en ce que** le système de gestion (34) comprend une matrice de routage numérique (100) qui est utilisée pour relier les unes aux autres par flux de signaux les entrées et les sorties de composants individuels du système de communication RFID (1), comme par exemple les sorties des antennes (3, 3') et les entrées d'antennes des appareils de lecture (6, 7) et/ou les sorties des appareils de lecture (6, 7) et les entrées (121, 122) du port de données (12) et pour les séparer les unes des autres.

3. Système de communication RFID selon la revendication 2, **caractérisé en ce que** la matrice de routage numérique (100) est en outre conçue pour transmettre des données de signaux, dudit au moins répéteur RFID (5) entre au moins deux appareils de lecture actifs (6) et en particulier de l'entrée d'un appareil de lecture actif (6) à la sortie d'un autre appareil de lecture actif (6).

4. Système de communication RFID selon l'une des revendications précédentes, **caractérisé en ce que** le nombre (n) des appareils de lecture inactifs (7) est inférieur au nombre (m) des appareils de lecture actifs (6).

5. Système de communication RFID selon l'une des revendications 1 à 3, **caractérisé en ce que** le nombre (n) des appareils de lecture inactifs (7) est identique au nombre (m) des appareils de lecture actifs (6).

6. Système de communication RFID selon l'une des revendications 1 à 3, **caractérisé en ce que** le nombre (n) des appareils de lecture inactifs (7) est supérieur au nombre (m) des appareils de lecture actifs (6).

7. Système de communication RFID selon l'une des revendications précédentes, **caractérisé en ce que** le système de gestion comprend une unité de commande (8) et **en ce que** l'unité de commande (8) comprend un module sélecteur d'appareil de lecture (9), dans lequel le module sélecteur d'appareil de lecture (9) est raccordé par l'intermédiaire d'un bus sélecteur LG (10) aux appareils de lecture (6, 7) afin de pouvoir activer et désactiver par l'intermédiaire de celui-ci les appareils de lecture (6, 7).

8. Système de communication RFID selon la revendication 7, **caractérisé en ce que** l'unité de commande (8) comprend au moins un port GPIO (15) qui est conçu pour délivrer au moins un signal de sortie en fonction d'un signal d'identification dudit au moins un répéteur RFID (5) à un ou plusieurs appareils de sortie (16, 17, 18) et/ou pour transmettre des logiciels/des micrologiciels à des appareils de lecture actifs.

9. Système de communication RFID selon l'une des revendications précédentes, **caractérisé en ce que** le système de communication RFID (1) comprend une station de base (2) comportant au moins deux appareils de lecture inactifs (7) et **en ce que** l'unité de commande (8) est configurée pour activer lesdits au moins deux appareils de lecture inactifs (7) selon une séquence prédéterminée.

10. Système de communication RFID selon la revendication 9, **caractérisé en ce que** l'unité de commande (8) est configurée pour activer ledit ou un appareil de lecture inactif (7) avant de désactiver ledit ou un appareil actif (6) de manière à ce que, pendant un temps prédéterminé, au moins deux appareils de lecture (6, 7) soient actifs, dans lequel le signal de sortie n'est délivré que par l'un desdits deux appareils de lecture actifs par l'intermédiaire de la station de base.

11. Système de communication RFID selon l'une des revendications précédentes, **caractérisé en ce que** le système de communication comporte une entrée de communication externe (20) destinée à un signal de commutation externe en tant que paramètre système.

12. Système de communication RFID selon la revendication 11, **caractérisé en ce que** le signal de commutation externe est conçu pour afficher une modification d'une fréquence de communication prédéterminée.

13. Système de communication RFID selon l'une des revendications 11 à 12, **caractérisé en ce que** le signal de commutation externe est conçu pour indiquer une modification d'une version du programme d'exploitation d'un ou plusieurs des appareils de lecture (6, 7).

14. Système de communication RFID selon l'une des revendications précédentes, **caractérisé en ce que** le système de communication RFID (1) comporte en tant que paramètre système un signal de battement de coeur (22) servant de signal de veille de tous les appareils de lecture (6, 7).

15. Procédé de commande d'un système de communication RFID (1) comportant au moins un appareil de lecture actif (6), qui est conçu pour identifier au moins un répéteur RFID (5), et comportant au moins un appareil de lecture inactif (7), **caractérisé en ce que** le procédé comprend les étapes consistant à :
- télécharger (36) et stocker des données de configuration de chaque appareil de lecture actif (6) vers une mémoire (19, 35) du système de gestion (34),
- demander un état d'activité de chaque appareil de lecture actif (6) au moyen d'une unité de commande (6) à des intervalles de temps réguliers, et
- en cas de panne d'un appareil de lecture actif (6), identifier l'appareil de lecture en panne et (6) charger (37) les données de configuration de l'appareil de lecture en panne (6) de la mémoire (19, 35) vers un appareil de lecture inactif (7) prédéterminé, et
- activer l'appareil de lecture inactif (7) prédéterminé pour identifier ledit au moins un répéteur RFID (5) au lieu de l'appareil de lecture en panne (6).

16. Procédé selon la revendication 15, **caractérisé en ce que**, lors de l'activation de l'appareil de lecture (7) inactif prédéterminé, l'étape de procédé suivante est exécutée :
- router les entrées et/ou les sorties de l'appareil de lecture précédemment inactif (7) par l'intermédiaire d'une matrice de routage (100) afin de remplacer l'appareil de lecture en panne (6), précédemment inactif, dans le flux de signaux du système de communication RFID (1).

17. Système de communication RFID selon l'une des revendications 15 à 16, **caractérisé en ce que** le système de communication RFID (1) transmet des données de signaux dudit au moins un répéteur RFID (5) entre au moins deux appareils de lecture actifs (6, 6').

18. Procédé selon l'une des revendications 15 à 17, **caractérisé en ce que** l'activation (25) d'au moins deux appareils de lecture inactifs (7) est effectuée par l'unité de commande (8) selon une séquence prédéterminée.

19. Procédé selon l'une des revendications 15 à 18, **caractérisé en ce qu'**un signal de commutation externe est demandé en tant que paramètre système.

20. Procédé selon la revendication 19, **caractérisé en ce que** le signal de commutation externe indique une modification d'une version de programme d'exploitation d'un ou plusieurs des appareils de lecture.

21. Procédé selon l'une des revendications 19 à 20, dans lequel un signal de veille de composants (6, 7, 11, 12, 15, ...) du système de communication RFID (1) et en particulier l'état d'activité respectif des appareils de lecture actifs (6) est demandé, dans lequel le signal de veille est en particulier un signal de battement de coeur.
